# EUROPEAN PATENT SPECIFICATION

(11) **EP 4 485 127 B1**
(45) Date of publication and mention of the grant of the patent: **21.01.2026**
(21) Application number: 24703906.8
(22) Date of filing: 08.02.2024
(51) Int. Cl.: G06F 1/16, H04M 1/02

(54) **FOLDABLE ELECTRONIC DEVICE AND HINGE STRUCTURE INCLUDED THEREIN**
FALTBARE ELEKTRONISCHE VORRICHTUNG UND SCHARNIERSTRUKTUR DARIN
DISPOSITIF ÉLECTRONIQUE PLIABLE ET STRUCTURE DE CHARNIÈRE INCLUSE DANS CELUI-CI

(30) Priority: 15.05.2023 KR 20230062198; 08.06.2023 KR 20230073417
(43) Date of publication of application: 01.01.2025
(73) Proprietor: Samsung Electronics Co., Ltd., Suwon-si, Gyeonggi-do 16677 (KR)
(72) Inventor: BAIK, Jinwook, Suwon-si, Gyeonggi-do 16677 (KR); KIM, Jongkeun, Suwon-si, Gyeonggi-do 16677 (KR)
(74) Representative: Gulde & Partner
(86) International application number: PCT/KR2024/001936
(87) International publication number: WO 2024/237431

(56) References cited:
- WO-A1-2023/038614
- CN-A- 115 695 595
- KR-A- 20220 168 295
- KR-A- 20230 021 934
- US-A1- 2019 278 338

## Description

### [Technical Field]

Various embodiments of the invention described herein relate to a hinge structure and a foldable electronic device including the hinge structure.

### [Background Art]

A portable electronic device, such as a smartphone, may provide a call function and various contents search and provision functions based on various types of applications. In a process of providing the various functions, the portable electronic device may output screens corresponding to the respective functions. A user may want to use a wider screen when using the various functions. However, when a display device is extended to display a screen, the overall size of the portable electronic device has to be increased, and therefore portability may be deteriorated. Accordingly, a foldable portable electronic device including a foldable display is provided to increase the size of a screen while maintaining portability. The foldable portable electronic device may have folded and unfolded states. The foldable portable electronic device may include a plurality of housings that support respective regions of the display in the unfolded state and a plurality of hinge structures that connect the plurality of housings. Since the foldable portable electronic device includes the plurality of housings and the plurality of hinge structures as described above, the housings of the foldable portable electronic device may be thicker than the housings of commercially available bar-type portable electronic devices, and therefore the foldable portable electronic device may be manufactured to be heavier than the commercially available bar-type portable electronic devices. For example, KR 2023 0021934 A discloses an electronic device comprising: a first housing; a second housing; and at least one hinge module for foldably coupling the first housing and the second housing about a folding axis. The at least one hinge module includes: a rotate bracket; a first rotate member rotatably coupled to the rotate bracket with respect to the folding axis and connected to the first housing; a second rotate member rotatably coupled to the rotate bracket with respect to the folding axis and connected to the second housing; at least one hinge module including a first arm coupled to the first rotate member and rotatably disposed on one side of the folding axis with respect to the first rotation axis of a first shaft disposed to be parallel to the folding axis, and a second arm coupled to the second rotate member and rotatably disposed on the other side of the folding axis with respect to the second rotation axis of a second shaft disposed to be parallel to the folding axis; a flexible display disposed to be supported by the first housing, the second housing, and the hinge module; a first plate disposed below the flexible display to at least partially overlap the first arm, and coupled to the first housing; and a second plate disposed below the flexible display to at least partially overlap the second arm, and coupled to the second housing. KR 2022 0168295 A relates to a foldable electronic device comprising: a display comprising a first area, a second area, and a flexible area between the first area and the second area; a first housing located in the first area; a second housing located in the second area; and a hinge assembly located in at least a portion of the flexible area, connecting the first housing and the second housing, and operating between a folded position at which the first area and the second area face each other and an unfolded position at which the first area and the second area do not face each other.

### [Invention]

### [Technical Solution]

A hinge structure and foldable electronic device including the same is provided herein, corresponding to the appended claims. The foldable electronic device (or, a portable electronic device, a portable communication device, a foldable electronic device, or a foldable electronic device having a communication function) according to various embodiments of the invention includes a display 160, a first housing **110** and a second housing 120 in each of which at least a portion of the display is accommodated, at least one hinge structure 200a or 200b that connects the first housing and the second housing, and a hinge housing on which the at least one hinge structure is seated. The at least one hinge structure according to the invention includes a fixed bracket 213 at least partially seated on the hinge housing, a first rotation member 211 and a second rotation member 212 coupled to the fixed bracket, a first arm member 221 that includes a first cam structure and rotates in response to rotation of the first rotation member, a second arm member 222 that includes a second cam structure and rotates in response to rotation of the second rotation member, a first shaft 231 fastened to the first arm member 221, a second shaft 232 fastened to the second arm member 222, a shaft fixing part 243 that fixes the first shaft and the second shaft, a first elastic member 242a disposed between the first shaft and the shaft fixing part, a second elastic member 242b disposed between the second shaft and the shaft fixing part, a cam member 241 including a first fixed cam part 241a having, on one side thereof, a first cam part fastened with the first cam structure of the first arm member and a second fixed cam part 241b having, on one side thereof, a second cam part fastened to the second cam structure of the second arm member, a first friction plate 251 that is disposed between the first elastic member and the cam member and that rotates depending on rotation of the first shaft, and a second friction plate 252 that is disposed between the second elastic member and the cam member and that rotates depending on rotation of the second shaft. The first fixed cam part includes a first protruding pattern 241_1 formed on an opposite side of the first fixed cam part and at least partially brought into contact with the first friction plate. The second fixed cam part includes a second protruding pattern 241_2 formed on an opposite side of the second fixed cam part and at least partially brought into contact with the second friction plate. A size of a contact surface of the first friction plate brought into contact with the first protruding pattern varies depending on rotation of the first friction plate, and a size of a contact surface of the second friction plate brought into contact with the second protruding pattern varies depending on rotation of the second friction plate.

The foldable electronic device of the present invention provides an improved sensitivity of the closing and opening process and the frictional force required for maintaining the angle in the flex operation can be increased. Moreover, the foldable electronic device provides a natural unfolding feeling.

### [Description of Drawings]

FIG. 1 is a perspective view illustrating folded and unfolded states of a foldable electronic device according to various embodiments.
FIG. 2 is an exploded perspective view illustrating some components of the foldable electronic device in the unfolded state according to various embodiments.
FIG. 3 is a view illustrating a first type hinge structure of the foldable electronic device according to an embodiment, which may be combined with any of the preceding embodiments.
FIG. 4 is an exploded perspective view of the first type hinge structure according to an embodiment, which may be combined with any of the preceding embodiments.
FIG. 5 is a view illustrating a portion of a cam member according to an embodiment.
FIG. 6 is a view illustrating a state of the hinge structure and an overlapping state of friction plates and the cam member in an unfolded state of the foldable electronic device according to an embodiment, which may be combined with any of the preceding embodiments.
FIG. 7 is a view illustrating a state of the hinge structure and an overlapping state of the friction plates and the cam member in a state in which the foldable electronic device is folded with a first angle according to an embodiment, which may be combined with any of the preceding embodiments.
FIG. 8 is a view illustrating a state of the hinge structure and an overlapping state of the friction plates and the cam member in a state in which the foldable electronic device is folded with a second angle according to an embodiment, which may be combined with any of the preceding embodiments.
FIG. 9 is a view illustrating a state of the hinge structure and an overlapping state of the friction plates and the cam member in a folded state of the foldable electronic device according to an embodiment, which may be combined with any of the preceding embodiments.
FIG. 10 is a graph depicting a change in torque depending on a change of state of foldable electronic devices from a folded state to an unfolded state according to an embodiment.
FIG. 11 is a view illustrating torque values for respective angles of the foldable electronic device according to an embodiment.
FIG. 12 is a view illustrating friction areas for respective angles of the foldable electronic device according to an embodiment.
FIG. 13 is an exploded perspective view of a second type hinge structure according to an embodiment.
FIG. 14 is a top view illustrating an exploded state of the second type hinge structure according to an embodiment.
FIG. 15 is a bottom view illustrating the exploded state of the second type hinge structure according to an embodiment.
FIG. 16 is a view illustrating some components of the second type hinge structure related to a change in frictional force according to an embodiment.
FIG. 17 is a view illustrating a change in contact states of some components of the second type hinge structure related to the change in frictional force according to an embodiment.
FIG. 18 is an exploded perspective view of a third type hinge structure according to an embodiment.
FIG. 19 is a top view illustrating an exploded state of the third type hinge structure according to an embodiment.
FIG. 20 is a bottom view illustrating the exploded state of the third type hinge structure according to an embodiment.
FIG. 21 is a view illustrating some components of the third type hinge structure related to a change in frictional force according to an embodiment.

### [Mode for Invention]

Hereinafter, various embodiments of the invention will be described with reference to the accompanying drawings.

The various embodiments of the invention provide a slim foldable electronic device having a reduced thickness and present a foldable electronic device including a slim hinge structure that allows a detent function and a flex function (a function by which housings maintain a specified open angle) to be maintained even in this process. The flex function (or, the flex mode) may include a mode in which the foldable electronic device maintains a specific state (e.g., an open state at an angle of 60° to 120°, the angle capable of being changed) by using frictional forces generated in a section where parts further protruding beyond the surroundings in a cam structure of the hinge structure come into contact with each other. The detent function (or, the detent mode) may include a mode that assists pressure using frictional forces on inclined parts of the protruding portions of the cam structure in a process of opening or closing the foldable electronic device.

Other aspects according to embodiments of the invention will be mentioned as needed in a process of describing the embodiments.

The foldable electronic device including the hinge structure, which will be described below, includes a dumbbell-type folding structure (or, a folding structure by which a folding region of a display has a water-drop shape and the separation angle between the housings remains constant) that supports folding the foldable electronic device with a parallel gap.

Various other aspects and effects provided by the foldable electronic device including the hinge structure according to the various embodiments may be mentioned depending on the embodiments in the detailed description of the invention.

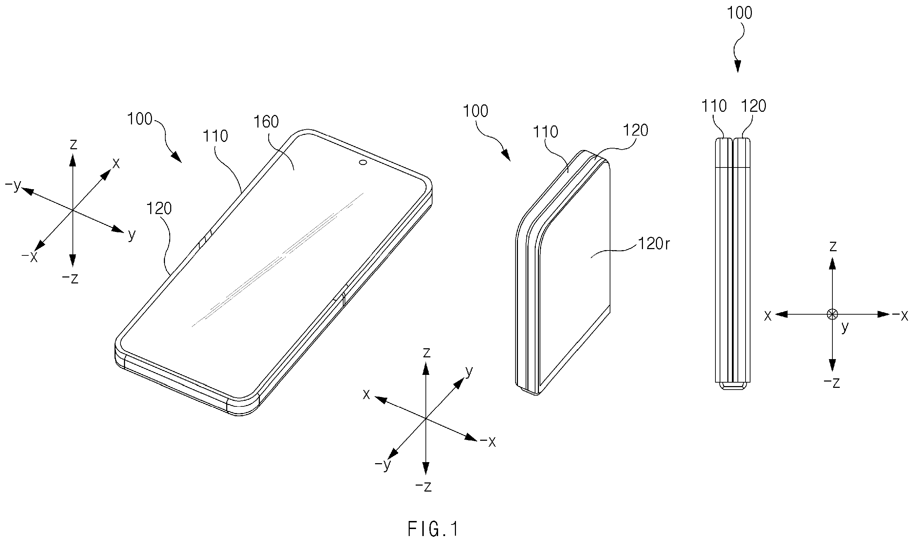

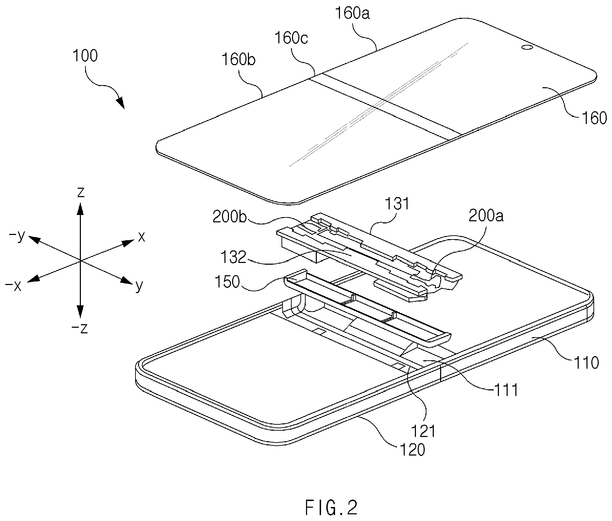

FIG. 1 is a perspective view illustrating folded and unfolded states of the foldable electronic device according to various embodiments, and FIG. 2 is an exploded perspective view illustrating some components of the foldable electronic device in the unfolded state according to various embodiments.

Referring to FIGS. 1 and 2, the foldable electronic device 100 (or, the electronic device) according to an embodiment includes housings including a first housing **110** and a second housing 120, a display 160 (e.g., a flexible display), and a hinge housing 150 in which hinge structures 200a and 200b (or, hinge structures) are disposed. FIG. 1 illustrates a perspective view of the foldable electronic device 100 in the flat or unfolded state and a perspective view of the foldable electronic device 100 in the folded state, and FIG. 2 is a perspective view illustrating an exploded state of the some components in the unfolded state of the foldable electronic device 100. Additionally or alternatively, the foldable electronic device 100 may further include a first cover that covers the rear side of the first housing **110** and a second cover 120r that covers the rear side of the second housing 120. Alternatively, a separate auxiliary display may be additionally disposed on the rear side of the first housing 110.

According to various embodiments, depending on an arrangement state, the first housing 110 may be disposed to be continuous with the second housing 120 (e.g., when a central part 160c of the display 160 is unfolded flat or when the housings are in the unfolded state), or may be disposed side by side with the second housing 120. Alternatively, when the central part 160c of the display 160 is folded, one surface of the first housing 110 may be disposed to face one surface of the second housing 120.

For example, at least a portion of the first housing 110 may be formed of a metallic material, or at least a portion of the first housing **110** may be formed of a non-metallic material. For example, the first housing **110** may be formed of a material having a certain rigidity to support at least a portion of the display 160. One region of the display 160 (e.g., an upper part 160a of the display 160 (or, one region in the x-axis direction, a first region) and a portion of the central part 160c) may be disposed on at least a portion of the front surface of the first housing 110. At least a portion of the first housing 110 may be attached with the upper part 160a of the display 160. Alternatively, at least a portion of the periphery of the front surface (e.g., a surface facing in the z-axis direction) of the first housing 110 may surround the periphery of the upper part 160a of the display 160 and may be attached with at least a portion of the upper part 160a of the display 160. In another case, one side of the upper portion of the front surface of the first housing 110 may be attached with one side of the upper part 160a of the display 160. In this regard, an adhesive layer may be at least partially disposed between the first housing 110 and the upper part 160a of the display 160. The first housing 110 may have an empty space in at least a portion thereof, or may be coupled with the first cover to form an empty space inside. Electronic components (e.g., a printed circuit board, and components, such as at least one processor, at least one memory, and a battery, which are mounted on the printed circuit board) required to drive the display 160 may be disposed in the empty space.

According to various embodiments, edges of the first housing 110 (e.g., the remaining three edges other than the edge facing the second housing 120) may protrude above the bottom surface of the central portion of the first housing 110 by a specified height to surround at least one edge of the display 160. Alternatively, sidewalls may be disposed on the edges of the first housing 110 to at least partially face the periphery of the display 160. The sidewalls formed on at least a portion of the periphery of the first housing 110 may be formed on the remaining three edges other than the edge facing the second housing 120 and may have a specified height. The edge portion of the first housing 110 that faces the second housing 120 may include a depression, at least a portion of which has a certain curvature such that at least a portion of the hinge housing 150 and at least portions of the hinge structures 200a and 200b seated on the hinge housing 150 are disposed therein. For example, the first housing 110 may include, on the edge portion facing the second housing 120, a first step portion 111 on which at least a portion of the first hinge structure 200a and at least a portion of the second hinge structure 200b are seated.

According to various embodiments, depending on an arrangement, the second housing 120 may be disposed side by side with the first housing 110, or may be disposed such that at least one surface thereof faces one surface of the first housing 110 (e.g., the surface on which the display 160 is disposed). The second housing 120 may be formed of the same material as that of the first housing 110. For example, at least a portion of the second housing 120 may be formed of a metallic material, and the remaining portion of the second housing 120 may be formed of a non-metallic material (e.g., a moldable material). The second housing 120 may be disposed to be symmetrical to the first housing 110 in the left-right direction or the up-down direction, and at least a portion of the remaining region of the display 160 (e.g., a lower part 160b of the display 160 (or, a second region facing in the -x-axis direction) and an opposite side of the central part 160c) other than the region disposed on the first housing 110 may be disposed on the front surface of the second housing 120. At least a portion of the second housing 120 may be attached with the lower part 160b of the display 160. Alternatively, the periphery of the front surface of the second housing 120 may be attached with the periphery of the lower part 160b of the display 160. In another case, one side of the lower portion of the front surface of the second housing 120 may be attached with one side of the lower part 160b of the display 160. In this regard, an adhesive layer may be at least partially disposed between the second housing 120 and the lower part 160b of the display 160. Similarly to the first housing 110, the second housing 120 may have an empty space in at least a portion thereof, or may be coupled with the second cover 120r to form an empty space inside. Electronic components required for driving the display 160 may be disposed in the empty space.

According to various embodiments, edges of the second housing 120 (e.g., the remaining three edges other than the edge facing the first housing 110) may protrude above the bottom surface of the central portion of the second housing 120 by a specified height to surround the periphery of the opposite side of the display 160. Alternatively, similarly to the sidewalls formed on the first housing 110, sidewalls may be disposed on the edges of the second housing 120 to at least partially face the periphery of the display 160. The sidewalls formed on at least a portion of the periphery of the second housing 120 may be formed on the remaining three edges other than the edge facing the first housing 110 and may have a specified height.

The edge portion of the second housing 120 that faces the first housing 110 may include a depression, at least a portion of which has a certain curvature such that at least a portion of the hinge housing 150 and at least portions of the hinge structures 200a and 200b seated on the hinge housing 150 are disposed therein. For example, the second housing 120 may include, on the edge portion facing the first housing 110, a second step portion 121 on which at least a portion of the first hinge structure 200a and at least a portion of the second hinge structure 200b are seated.

According to various embodiments, the foldable electronic device 100 may include at least one sensor disposed on one side of the first housing 110 or the second housing 120 and associated with operation of a specific function of the foldable electronic device 100. The sensor may include, for example, at least one of a proximity sensor, an illuminance sensor, an iris sensor, an image sensor (or, a camera), or a fingerprint sensor.

According to various embodiments, depending on the folded or unfolded state of the foldable electronic device 100, the hinge housing 150 may be hidden by one side of the first housing 110 and one side of the second housing 120 (e.g., in an unfolded state of the housings), or may be exposed to the outside (e.g., in a folded state of the housings). For example, when the first housing 110 and the second housing 120 are disposed side by side as illustrated in FIG. 1 (or, when the housings 110 and 120 are in the unfolded state), the hinge housing 150 may be hidden by the first housing 110 and the second housing 120. When one surface of the first housing 110 and one surface of the second housing 120 are disposed to face each other (or, when the housings 110 and 120 are in the folded state), at least a portion of the hinge housing 150 may be exposed to the outside from between one edge of the first housing 110 and one edge of the second housing 120 (e.g., the edges of the first housing 110 and the second housing 120 that face each other in the unfolded state).

According to various embodiments, at least a portion of the display 160 may be flexible. According to an embodiment, the display 160 may include the upper part 160a or the first region that is disposed on the first housing 110, the lower part 160b or the second region that is disposed on the second housing 120, and the central part 163 or the central region to which the first housing 110 and the second housing 120 are adjacent. According to various embodiments, the entire display 160 may have flexibility. Alternatively, at least a portion of the central part 160c of the display 160 may be flexible. The central part 160c of the display 160 may be disposed such that the first housing 110 and the second housing 120 are not attached thereto. For example, the central part 160c of the display 160 may be spaced apart from the front surfaces of the first housing 110 and the second housing 120 at a certain interval. The upper part 160a of the display 160 may be attached with at least a portion of the first housing 110, and the lower part 160b of the display 160 may be attached with at least a portion of the second housing 120. In this regard, an adhesive layer may be disposed in at least a partial region between the display 160 and the first housing 110, and an adhesive layer (an adhesive layer disposed in a different position from the adhesive layer bonding the first housing 110 and at least a portion of the upper part 160a of the display 160) may be disposed in at least a partial region between the display 160 and the second housing 120. The adhesive layer disposed on the first housing 110 and the adhesive layer disposed on the second housing 120 may be disposed only on the peripheries of the first housing 110 and the second housing 120.

According to various embodiments, the hinge structures 200a and 200b may include the first hinge structure 200a and the second hinge structure 200b. Although FIG. 2 illustrates the state in which the first hinge structure 200a and the second hinge structure 200b are disposed on the hinge housing 150, the invention is not limited thereto, and three or more hinge structures may be disposed on the hinge housing 150 as needed.

The first hinge structure 200a may be disposed on one side of the hinge housing 150 (e.g., on the left side with respect to the vertical center line of the foldable electronic device in the illustrated drawing). The first hinge structure 200a may be coupled with one side of the first housing 110 and one side of the second housing 120 (e.g., the right sides with respect to the vertical center line of the foldable electronic device (e.g., a virtual line connecting the x-axis to the -x-axis and crossing the center of the display 160)) and may rotate within a specified range about the horizontal axis of the hinge housing 150 (e.g., the y-axis or the -y-axis). The first hinge structure 200a may be disposed to be symmetrical to the second hinge structure 200b with respect to the central portion of the hinge housing 150.

The second hinge structure 200b may be disposed on the opposite side of the hinge housing 150 (e.g., on the left side with respect to the vertical center line of the foldable electronic device in the illustrated drawing). The second hinge structure 200b may be coupled with the opposite side of the first housing 110 (e.g., the left side with respect to the vertical center line of the foldable electronic device (e.g., a virtual line connecting the x-axis and the -x-axis and crossing the center of the display 160)) and the opposite side of the second housing 120 (e.g., the left side with respect to the vertical center line of the foldable electronic device) and may rotate within a specified range about the horizontal axis of the hinge housing 150. The second hinge structure 200b may be disposed to be symmetrical to the first hinge structure 200a with respect to the central portion of the hinge housing 150. The second hinge structure 200b may include the same structure and configuration as the first hinge structure 200a, but may be disposed in a position different from the position of the first hinge structure 200a.

According to an embodiment, in the foldable electronic device 100, wing plates 131 and 132 may be placed on or coupled with the hinge structures 200a and 200b and may cover surfaces of the hinge structures 200a and 200b facing in the z-axis direction when the foldable electronic device 100 is in the unfolded state. The wing plates 131 and 132 may be provided in a form separated from the housings 110 and 120. Accordingly, gaps may be formed between the wing plates 131 and 132 and the housings 110 and 120. According to various embodiments, the housings 110 and 120 may have grooves in which the wing plates 131 and 132 are seated. The wing plates 131 and 132 may be disposed to correspond to at least portions of the lower surface (e.g., a surface facing in the -z-axis direction) of the third region 160c (or, the central part) of the display 160. The wing plates 131 and 132 may rotate in the clockwise or counterclockwise direction depending on hinge operations of the hinge structures 200a and 200b. For example, while the first wing plate 131 rotates in the counterclockwise direction, the second wing plate 132 may rotate in the clockwise direction, and while the first wing plate 131 rotates in the clockwise direction, the second wing plate 132 may rotate in the counterclockwise direction. The first wing plate 131 may support a first flat surface of the third region 160c of the display 160 that is folded in a dumbbell shape, and the second wing plate 132 may support a second flat surface (a surface symmetrical to the first surface with respect to the z-axis) of the third region 160c of the display 160 that is folded in a dumbbell shape.

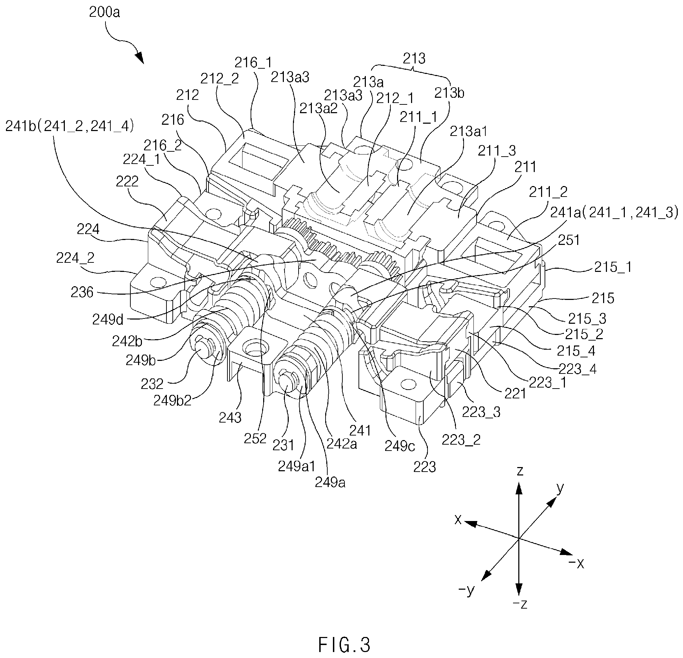

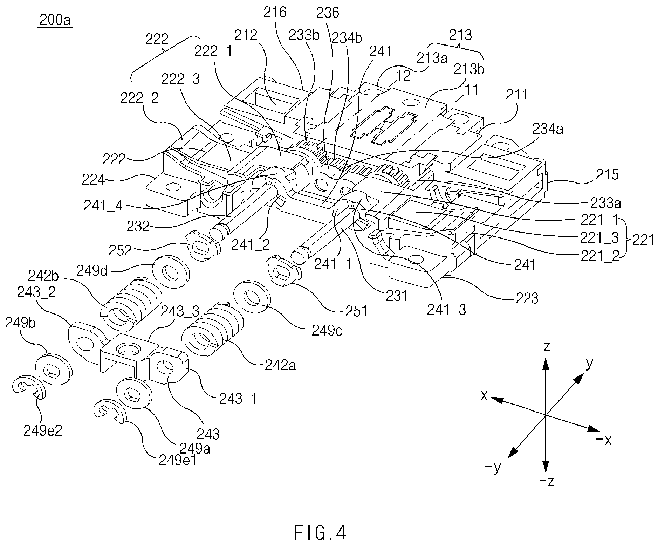

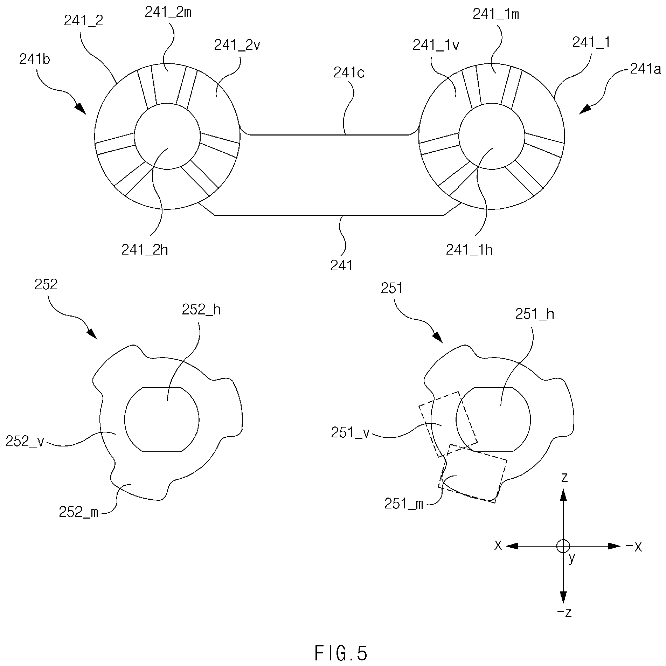

FIG. 3 is a view illustrating a first type hinge structure of the foldable electronic device according to an embodiment. FIG. 4 is an exploded perspective view of the first type hinge structure according to an embodiment. FIG. 5 is a view illustrating a portion of a cam member according to an embodiment. In FIGS. 3 and 4, the first hinge structure 200a of the first type hinge structure 200a and 200b will be described as an example. The first hinge structure 200a, which will be described below with reference to FIG. 4, may have the same structure and configuration as the second hinge structure 200b.

Referring to FIGS. 1 to 4, the first hinge structure 200a includes a fixed bracket 213, a first rotation member 211 (or, a first rotation structure, a first rotation part, or a first rotation body) that rotates about a first axis 11 (e.g., a first virtual axis in the y-axis direction that is different from a first shaft 231), a second rotation member 212 (or, a second rotation structure, a second rotation part, or a second rotation body) that rotates about a second axis 12 (e.g., a second virtual axis different from a second shaft 232 and formed parallel to the first axis 11), a first arm member 221 (or, a first arm part or a first arm structure) that rotates about the first shaft 231 (or, a first central axis of the first shaft), a second arm member 222 (or, a second arm part or a second arm structure) that rotates about the second shaft 232 (or, a second central axis of the second shaft), a first link member 215 that fixes the first rotation member 211 to the first housing 110 and supports a rotation operation (or, a sliding operation) of the first rotation member 211, a second link member 216 that fixes the second rotation member 212 to the second housing 120 and supports a rotation operation (or, a sliding operation) of the second rotation member 212, a third link member 223 that fixes the first arm member 221 to the first housing 110 and supports a rotation operation (or, a sliding operation) of the first arm member 221, and a fourth link member 224 that fixes the second arm member 222 to the second housing 120 and supports a rotation operation (or, a sliding operation) of the second arm member 222. At least some of the components of the first hinge structure 200a described above (e.g., at least some of the first to fourth link members 215, 216, 223, and 224) may be omitted. For example, the first rotation member 211 and the second rotation member 212 may be directly coupled to the housings 110 and 120, and the arm members 221 and 222 may be coupled to the rotation members 211 and 212 and may rotate in response to rotation of the rotation members 211 and 212.

In an embodiment, the first hinge structure 200a may comprise a first link member 215 that fixes the first rotation member 211 to the first housing 110 and supports a rotation operation (or, a sliding operation) of the first rotation member 211, a second link member 216 that fixes the second rotation member 212 to the second housing 120 and supports a rotation operation (or, a sliding operation) of the second rotation member 212, a third link member 223 that fixes the first arm member 221 to the first housing 110 and supports a rotation operation (or, a sliding operation) of the first arm member 221, and a fourth link member 224 that fixes the second arm member 222 to the second housing 120 and supports a rotation operation (or, a sliding operation) of the second arm member 222.

Additionally or alternatively, the first hinge structure 200a may include a first main gear 233a formed (or, disposed) on the first shaft 231, a second main gear 233b formed (or, disposed) on the second shaft 232, one or more idle gears 234a and 234b disposed between the first main gear 233a and the second main gear 233b, a stopper 236 that fixes the first main gear 233a, the second main gear 233b, and the one or more idle gears 234a and 234b and prevents the first arm member 221 and the second arm member 222 from rotating through a specified angle or more, a shaft fixing part 243 used to fix the first shaft 231 and the second shaft 232, the cam member 241 cam-coupled with cam structures formed on the first arm member 221 and the second arm member 222 (e.g., a first cam structure of the first arm member 221 and a second cam structure of the second arm member 222), a first elastic member 242a (or, an elastic body) and a second elastic member 242b that provide elastic forces to the cam member 241, a plurality of coupling members 249e1 and 249e2 (or, fixing clips), and washer rings 249a, 249b, 249c, and 249d.

At least some of the components of the first hinge structure 200a described above may be at least partially formed of a metallic material and may have a certain rigidity. Alternatively, the first hinge structure 200a may include a reinforced plastic or resin material as needed. According to various embodiments, at least some of the components of the first hinge structure 200a described above may be omitted or modified. For example, the gears and the stopper 236 may be omitted. In addition, at least some of the washer rings 249a, 249b, 249c, and 249d may be omitted. Alternatively, a specific structure or component may be integrated with another structure or component. For example, among the link members 215, 216, 223, and 224, at least some link members (e.g., the first link member 215 and the third link member 223 or the second link member 216 and the fourth link member 224) may be integrated with each other. The first hinge structure 200a according to an embodiment includes a first friction plate 251 (or, a first substrate or a first support substrate) and a second friction plate 252 (or, a second substrate or a second support substrate) that are disposed to make contact with one side of the cam member 241.

At least a portion of the lower surface (e.g., a surface facing in the -z-axis direction) of the fixed bracket 213 may include a curved surface. For example, at least a portion of the lower surface of the fixed bracket 213 may be formed to correspond to the shape of the inside of the hinge housing 150. At least a portion of the upper surface (e.g., a surface facing in the z-axis direction) of the fixed bracket 213 may be provided in a flat shape. The fixed bracket 213 may include a lower fixed bracket 213a having rails 213a1 and 213a2 to which the rotation members 211 and 212 are coupled and an upper fixed bracket 213b that covers an upper portion of the lower fixed bracket 213a. According to an embodiment, the fixed bracket 213 may have a section, at least a portion of which includes an arc shape in the direction from the upper surface (e.g., a surface facing in the z-axis direction) to the lower surface (e.g., a surface facing in the -z-axis direction). The lower fixed bracket 213a may include the first rail 213a1 into which a first rail structure 211_1 of the first rotation member 211 having the first rail structure 211_1 and a second rail structure is inserted from a first direction (e.g., the -x-axis direction) to a second direction (e.g., the x-axis direction) and the second rail 213a2 into which a third rail structure 212_1 of the second rotation member 212 having the third rail structure 212_1 and a fourth rail structure 212_2 is inserted from the second direction (e.g., the x-axis direction) to the first direction (e.g., the -x-axis direction). Based on the first axis 11 or the second axis 12 (or, based on the x-axis crossing the center between the first rotation member 211 and the second rotation member 212), the first rail 213a1 may be disposed to be biased in the -x-axis direction when compared to the second rail 213a2, and the second rail 213a2 may be disposed to be biased in the x-axis direction when compared to the first rail 213a1. The first rail structure 211_1 of the first rotation member 211 inserted into the first rail 213a1 may rotate about the first axis 11, and the third rail structure 212_1 of the second rotation member 212 inserted into the second rail 213a2 may rotate about the second axis 12. The first axis 11 and the second axis 12 may be formed above the upper surface (e.g., a surface facing in the z-axis direction) of the fixed bracket 213. Alternatively, the first axis 11 and the second axis 12 may be formed between the upper surface of the display 160 and the lower surface (e.g., a surface facing in the -z-axis direction) of the upper fixed bracket 213b.

According to an embodiment, the first axis 11 and the second axis 12 may be spaced apart from each other by a specified gap. According to various embodiments, the gap between the first axis 11 and the second axis 12 may be smaller than the gap between the first shaft 231 and the second shaft 232. According to various embodiments, the first axis 11 and the second axis 12 may be formed above the first shaft 231 and the second shaft 232 based on the z-axis. Alternatively, based on the z-axis, the first axis 11 and the second axis 12 may be formed closer to the upper surface of the display 160 than the first shaft 231 and the second shaft 232. According to various embodiments, the lower fixed bracket 213a may include at least one fixing hole used to fix the fixed bracket 213 to the hinge housing 150. The upper fixed bracket 213b may be fixed to the lower fixed bracket 213a through at least one coupling member. In the foldable electronic device 100, the fixed bracket 213 may be fixed to the hinge housing 150 through a coupling member (e.g., a screw, a rivet, or welding).

The lower fixed bracket 213a may include, in a sidewall in the -y-axis direction, main mounting grooves in which one end (e.g., an end facing in the y-axis direction) of the first shaft 231 and one end (e.g., an end facing in the y-axis direction) of the second shaft 232 are mounted. According to an embodiment, the lower fixed bracket 213a may include, between the main mounting grooves formed in the sidewall facing in the -y-axis direction, idle mounting grooves in which one side of the idle gear 234a and one side of the idle gear 234b (e.g., idle shafts formed at the centers of the idle gears 234a and 234b) are mounted.

The upper fixed bracket 213b may be disposed between the lower fixed bracket 213a and the rotation members 211 and 212 and may prevent separation of the rotation members 211 and 212 and the idle gears 234a and 234b. In this regard, the upper fixed bracket 213b may include a plurality of guide holes. For example, the upper fixed bracket 213b may include a guide hole through which one end of the first rail structure 211_1 of the first rotation member 211 passes and a guide hole through which one end of the third rail structure 212_1 of the second rotation member 212 passes.

The first rotation member 211 may include a first rotation body 211_3, the first rail structure 211_1 extending from one end (e.g., an end facing in the x-axis direction) of the first rotation body 211_3, and the second rail structure 211_2 extending from an opposite end (e.g., an end facing in the -x-axis direction) of the first rotation body 211_3. The first rotation body 211_3 may be disposed between the first rail structure 211_1 and the second rail structure 211_2 that have a rail shape. At least a portion of the first rotation body 211_3 may be fastened with one side of the lower fixed bracket 213a. The first rail structure 211_1 and the second rail structure 211_2 may be formed with a step with respect to the first rotation body 211_3.

The first rail structure 211_1 of the first rotation member 211 may be fastened to one side (e.g., the first rail 213a1) of the fixed bracket 213 so as to perform a hinge motion. The second rail structure 211_2 of the first rotation member 211 may be coupled to one side of the first link member 215 and may perform a sliding operation (or, a rotation operation or an arc motion) in response to a hinge operation (or, a rotation operation or a sliding operation) of the first rail structure 211_1. The first rail structure 211_1 of the first rotation member 211 fastened with the fixed bracket 213 may perform a rotational motion in place about the first axis 11 while the first link member 215 coupled to the first housing 110 moves depending on movement of the first housing 110. For example, the second rail structure 211_2 of the first rotation member 211 may rotate (or, slide) within the first link member 215 while moving in one direction (e.g., in the counterclockwise direction while the foldable electronic device 100 is folded in the unfolded state or in the clockwise direction while the foldable electronic device 100 is unfolded in the folded state). At least a portion of the first wing plate 131 may be fixed to the first rotation member 211. In this regard, the first rotation body 211_3 may include at least one hole or groove used to couple the first rotation body 211_3 with the first wing plate 131.

According to an embodiment, the second rotation member 212 may include a part (e.g., the third rail structure 212_1) fastened to an opposite side (e.g., the second rail 213a2) of the fixed bracket 213 to perform a hinge motion, a part (e.g., the fourth rail structure 212_2) coupled to the second link member 216, and a second rotation body 212_3 disposed between the third rail structure 212_1 and the fourth rail structure 212_2. The third rail structure 212_1 and the fourth rail structure 212_2 may be formed with a step with respect to the second rotation body 212_3.

The third rail structure 212_1 of the second rotation member 212 fastened with the fixed bracket 213 may perform a rotational motion in place about the second axis 12 while the second link member 216 coupled to the second housing 120 moves depending on movement of the second housing 120. The fourth rail structure 212_2 coupled to the second link member 216 may rotate (or, slide) within the second link member 216 while moving in one direction (e.g., in the counterclockwise direction while the foldable electronic device 100 is folded in the unfolded state or in the clockwise direction while the foldable electronic device 100 is unfolded in the folded state). The third rail structure 212_1 may include a rail structure that is the same as or similar to the first rail structure 211_1. The fourth rail structure 212_2 coupled to the second link member 216 may rotate (or, slide) within the second link member 216 while moving in one direction (e.g., in the counterclockwise direction while the foldable electronic device 100 is folded in the unfolded state or in the clockwise direction while the foldable electronic device 100 is unfolded in the folded state). In this regard, similarly to the first link member 215, the second link member 216 may have an empty space formed in the central portion thereof and may include rail wings that are disposed on opposite sides and that include a curved surface.

Similarly to the first rotation member 211, the second rotation member 212 may make frictional contact with the fixed bracket 213 and the second link member 216 while a hinge operation is repeated, and the second rotation member 212 may be formed of a material (e.g., a metallic material) that has a certain strength or higher and is capable of withstanding the friction. For example, the second rotation member 212 may be formed of the same material as that of the first rotation member 211. A portion of the second wing plate 132 may be fixed to the second rotation member 212. In this regard, the second rotation body 212_3 may include at least one hole or groove used to couple the second rotation body 212_3 with the second wing plate 132. The second rotation member 212 may perform a motion in the direction opposite to that of the first rotation member 211. For example, the third rail structure 212_1 of the second rotation member 212 may rotate in place in the clockwise direction while the first rail structure 211_1 of the first rotation member 211 rotates in place in the counterclockwise direction.

While the foldable electronic device 100 is folded, the first rail structure 211_1 of the first rotation member 211 may perform a rotational motion in the counterclockwise direction, and the first link member 215 inserted into the second rail structure 211_2 may slide in the clockwise direction along the second rail structure 211_2 (the sliding operation is relative, and therefore the first link member 215 may slide in the clockwise direction relative to the second rail structure 211_2). While the foldable electronic device 100 is folded, the third rail structure 212_1 of the second rotation member 212 may perform a rotational motion in the clockwise direction along the second rail 213a2 of the fixed bracket 213, and the second link member 216 inserted into the fourth rail structure 212_2 may slide in the counterclockwise direction (the sliding operation is relative, and therefore the second link member 216 may slide in the clockwise direction relative to the fourth rail structure 212_2).

According to an embodiment, the first link member 215 includes a structure coupled and fixed to one side of the first housing 110. The first link member 215 may include an eleventh link sidewall 215_1 (or, a first sidewall of the first link member 215), a twelfth link sidewall 215_2 (or, a second sidewall of the first link member 215), and a first link connecting part 215_4. The eleventh link sidewall 215_1 and the twelfth link sidewall 215_2 may extend in the z-axis direction from opposite sides (e.g., edges facing in the x-axis and -x-axis directions) of a first link body 215_3, and the first link connecting part 215_4 may connect the first link body 215_3 with the third link member 223. The first link member 215 includes a structure (e.g., the eleventh link sidewall 215_1 and the twelfth link sidewall 215_2) on which a portion of the first rotation member 211 (e.g., the second rail structure 211_2) is seated. A rail wing protruding toward the twelfth link sidewall 215_2 may be formed on the eleventh link sidewall 215_1, and a rail wing protruding toward the eleventh link sidewall 215_1 may be formed on the twelfth link sidewall 215_2. The rail wings may be fastened with the second rail structure 211_2. At least one structure (e.g., hole or groove) used to fix the first link member 215 to the first housing 110 may be formed in at least one of the eleventh link sidewall 215_1 or the twelfth link sidewall 215_2. The first link member 215 may be disposed side by side with the third link member 223 in the y-axis direction. The first link connecting part 215_4 may protrude from the twelfth link sidewall 215_2 toward the third link member 223.

According to an embodiment, the second link member 216 includes a structure coupled and fixed to one side of the second housing 120. The second link member 216 may include a 21^{st} link sidewall 216_1, a 22^{nd} link sidewall 216_2, and a second link connecting part 216_4. The 21^{st} link sidewall 216_1 and the 22^{nd} link sidewall 216_2 may extend in the z-axis direction from opposite sides (e.g., edges facing in the y-axis and -y-axis directions) of a second link body 216_3, and the second link connecting part 216_4 may be used to connect the second link member 216 with the fourth link member 224. The second link member 216 includes a structure (e.g., the 21^{st} link sidewall 216_1 and the 22^{nd} link sidewall 216_2) on which a portion of the second rotation member 212 (e.g., the fourth rail structure 212_2) is seated. A rail wing protruding toward the 22^{nd} link sidewall 216_2 may be formed on the 21^{st} link sidewall 216_1, and a rail wing protruding toward the 21^{st} link sidewall 216_1 may be formed on the 22^{nd} link sidewall 216_2. The rail wings may be fastened with the fourth rail structure 212_2. At least one structure (e.g., hole or groove) used to fix the second link member 216 to the second housing 120 may be formed in the 21^{st} link sidewall 216_1 and the 22^{nd} link sidewall 216_2. The above-described second link member 216 may be disposed to be symmetrical to the first link member 215 based on the y-axis direction. The second link member 216 may be disposed side by side with the fourth link member 224 in the y-axis direction. The second link connecting part 216_4 may protrude from the 22^{nd} link sidewall 216_2 toward the fourth link member 224.

According to an embodiment, the third link member 223 includes a structure on which a portion of the first arm member 221 is seated. The third link member 223 may include a third link body 223_3, and a 31^{st} link sidewall 223_1 and a 32^{nd} link sidewall 223_2 that extend in the -z-axis direction from opposite sides (e.g., edges facing in the y-axis and -y-axis directions) of the third link body 223_3. A rail wing protruding toward the 32^{nd} link sidewall 223_2 may be formed on the 31^{st} link sidewall 223_1, and a rail wing protruding toward the 31^{st} link sidewall 223_1 may be formed on the 32^{nd} link sidewall 223_2. The rail wings may be fastened to one side (e.g., a rail groove formed in the y-axis direction) and an opposite side (e.g., a rail groove formed in the -y-axis direction) of a second arm part 221_2 of the first arm member 221, respectively, which includes the first arm part 221_1 and a second arm part 221_2. A structure (e.g., at least one hole or groove) used to fix the third link member 223 to the first housing 110 may be formed in the 31^{st} link sidewall 223_1 and the 32^{nd} link sidewall 223_2. An empty space may be formed between the 31^{st} link sidewall 223_1 and the 32^{nd} link sidewall 223_2, and the second arm part 221_2 of the first arm member 221 may be seated in the empty space to guide a sliding operation of the second arm part 221_2. The third link member 223 may include a third link connecting part protruding in the y-axis direction from one side (e.g., the 31^{st} link sidewall 223_1) of the third link body 223_3. The third link connecting part may overlap the first link connecting part 215_4 of the first link member 215 in a process in which the first link member 215 and the third link member 223 are fixed to the first housing 110.

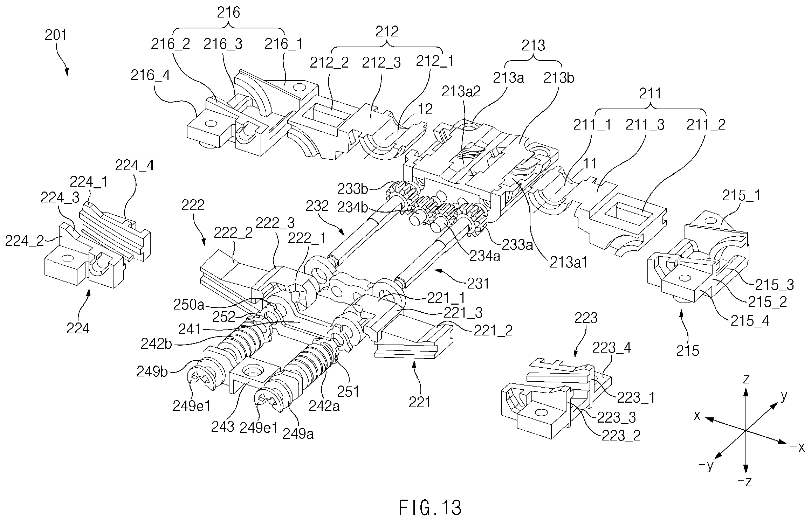

According to an embodiment, the fourth link member 224 includes a structure on which a portion of the second arm member 222 is seated. In this regard, the fourth link member 224 may include a fourth link body (e.g., a link body that has the same shape as the third link body 223_3 and that is disposed in a position symmetrical to the third link body 223_3 with respect to the y-axis, 224_3 in FIG. 13 to be described below), a 41^{st} link sidewall 224_1 and a 42^{nd} link sidewall 224_2 extending in the -z-axis direction from opposite sides (e.g., edges facing in the y-axis and -y-axis directions) of the fourth link body, and a fourth link connecting part. A rail wing protruding toward the 42^{nd} link sidewall 224_2 may be formed on the 41^{st} link sidewall 224_1, and a rail wing protruding toward the 41^{st} link sidewall 224_1 may be formed on the 42^{nd} link sidewall 224_2. The rail wings may be fastened with one side (e.g., a rail groove formed in the y-axis direction) and an opposite side (e.g., a rail groove formed in the -y-axis direction) of a fourth arm part 222_2 of the second arm member 222, respectively, which includes a third arm part 222_1 and the fourth arm part 222_2. A structure (e.g., at least one hole or groove) used to fix the fourth link member 224 to the second housing 120 may be formed in the 41^{st} link sidewall 224_1 and the 42^{nd} link sidewall 224_2. An empty space may be formed between the 41^{st} link sidewall 224_1 and the 42^{nd} link sidewall 224_2. The empty space may be used to guide the fourth arm part 222_2 during a sliding operation of one side (e.g., the fourth arm part 222_2) of the second arm member 222. The fourth link member 224 may include the fourth link connecting part protruding in the y-axis direction from one side (e.g., the 41^{st} link sidewall 224_1) of the fourth link body. The fourth link connecting part may overlap the second link connecting part 216_4 of the second link member 216 in a process in which the second link member 216 and the fourth link member 224 are fixed to the second housing 120.

The first to fourth link members 215, 216, 223, and 224 may be formed of the same material. Alternatively, the first to fourth link members 215, 216, 223, and 224 may be at least partially formed of different materials (e.g., moldable materials). Meanwhile, although it has been exemplified that the link members 215, 216, 223, and 224 are separated from one another, the invention is not limited thereto. For example, the first link member 215 and the third link member 223 may be connected or integrated with each other, and the second link member 216 and the fourth link member 224 may be connected or integrated with each other.

According to an embodiment, the first arm member 221 may be disposed to be symmetrical to the second arm member 222 with respect to the y-axis or the -y-axis. Accordingly, parts of the structure of the first arm member 221 that are difficult to observe in the illustrated drawings will be described based on the structure of the second arm member 222. The first arm member 221 may perform a rotational motion in the direction from the z-axis to the -x-axis or in the direction from the -x-axis to the z-axis. The first arm member 221 may include a first arm body 221_3, the first arm part 221_1, and the second arm part 221_2. The first arm body 221_3 may be disposed between the first arm part 221_1 and the second arm part 221_2. The first arm part 221_1 may extend from the first arm body 221_3 in the x-axis direction and may include a first through-hole through which the first shaft 231 passes, and a first cam structure making contact with one side (e.g., a cam part disposed in the -x-axis direction) of the cam member 241 and performing a cam operation may be provided on a peripheral structure that forms the first through-hole. The first through-hole may have an at least partially dented shape or a z-axis section, a portion of which has the shape of "D", so as to rotate as the first shaft 231 rotates. The first cam structure of the first arm part 221_1 may be formed on a surface facing toward the cam member 241 (e.g., on a surface of the first arm member 221 that faces in the -y-axis direction, or in a direction toward the center of the hinge housing 150). The first arm part 221_1 facing the stopper 236 may include a hook or step that is stopped by one side of the stopper 236 (e.g., a stopper part of a region disposed on the first main gear 233a) when the foldable electronic device 100 is about to rotate through a pre-defined angle or more. The first arm part 221_1 mounted on the first shaft 231 may be disposed between the stopper 236 and one side of the cam member 241. The second arm part 221_2 may extend from the first arm body 221_3 in the -x-axis direction. The second arm part 221_2 may be fastened to the third link member 223 and may perform a sliding operation along the rail wings formed on the third link member 223 while the foldable electronic device 100 performs a hinge operation. In this regard, the second arm part 221_2 may include rail grooves fastened with the rail wings formed on the third link member 223.

According to an embodiment, the second arm member 222 may be disposed to be symmetrical to the first arm member 221 with respect to the y-axis or the -y-axis. The second arm member 222 may perform a rotational motion in the direction from the z-axis to the x-axis or in the direction from the x-axis to the z-axis. The second arm member 222 may perform a rotational motion in the direction opposite to the direction of motion of the first arm member 221. The second arm member 222 may include a second arm body 222_3, the third arm part 222_1, and the fourth arm part 222_2. The second arm body 222_3 may be disposed between the third arm part 222_1 and the fourth arm part 222_2. The third arm part 222_1 may extend from the second arm body 222_3 in the -x-axis direction and may include a second through-hole through which the second shaft 232 passes, and a second cam structure making contact with an opposite side (e.g., a cam part disposed in the x-axis direction) of the cam member 241 and performing a cam operation may be provided on a peripheral structure that forms the second through-hole. Similarly or identically to the first through-hole, the second through-hole may have an at least partially dented shape or a z-axis section, a portion of which has the shape of "D", so as to rotate as the second shaft 232 rotates. The second cam structure of the third arm part 222_1 may be formed on a surface facing toward the cam member 241 (e.g., on a surface of the second arm member 222 that faces in the -y-axis direction, or in a direction toward the center of the hinge housing 150). The third arm part 222_1 facing the stopper 236 may include a hook or step that is stopped by an opposite side of the stopper 236 (e.g., a stopper part of a region disposed on the second main gear 233b). When external pressure is applied at an angle exceeding the angle by which the foldable electronic device 100 is unfolded (e.g., at an angle exceeding 180 degrees), the step of the third arm part 222_1 may be supported by the stopper 236 to prevent the foldable electronic device 100 from being folded beyond a specified angle. The third arm part 222_1 mounted on the second shaft 232 may be disposed between the stopper 236 and one side of the cam member 241. The fourth arm part 222_2 may extend from the second arm body 222_3 in the x-axis direction. The fourth arm part 222_2 may be fastened to the fourth link member 224 and may perform a sliding operation along the rail wings formed on the fourth link member 224 while the foldable electronic device 100 performs a hinge operation. In this regard, the fourth arm part 222_2 may include rail grooves fastened with the rail wings formed on the fourth link member 224.

According to an embodiment, the first shaft 231 may have a rod shape longer in the y-axis or -y-axis direction than in the x-axis or z-axis direction. The first shaft 231 may be formed of a metallic material so as to support components mounted thereon. The first main gear 233a may be coupled to or formed at one end of the first shaft 231 (e.g., may be integrated with the one end of the first shaft 231). The z-axis section of the first shaft 231 may include a flat region and a curved surface. For example, an upper surface and a lower surface of the z-axis section of the first shaft 231 may be formed flat, and opposite side surfaces of the z-axis section of the first shaft 231 may include a curved surface. Alternatively, the z-axis section of the first shaft 231 may have a polygonal shape (e.g., a triangular shape, a quadrangular shape, a pentagonal shape, a hexagonal shape, or the like). Accordingly, a structure including a circular through-hole may maintain the current state without being rotated while the first shaft 231 rotates, and a structure including a through-hole having an angled shape similar to that of the first shaft 231 may rotate together while the first shaft 231 rotates. For example, the first arm part 221_1 of the first arm member 221, a first fixed cam part 241a of the cam member 241, the first friction plate 251, at least one washer ring (e.g., the first washer ring 249a and the third washer ring 249c), the first elastic member 242a, a first fixing part 243_1 of the shaft fixing part 243, and the first coupling member 249e 1 (e.g., a first E-ring) may be mounted on the first shaft 231.

According to an embodiment, the second shaft 232 may have a shape that is the same as or similar to that of the first shaft 231. For example, the second shaft 232 may have a rod shape longer in the y-axis or -y-axis direction than in the x-axis or z-axis direction. The second shaft 232 may be formed of a metallic material having a specified strength or higher so as to support components mounted thereon. The second main gear 233b may be coupled to or formed at one end of the second shaft 232 (e.g., may be integrated with the one end of the second shaft 232). For example, an upper surface and a lower surface of the z-axis section of the second shaft 232 may be formed flat, and opposite side surfaces of the z-axis section of the second shaft 232 may include a curved surface. Alternatively, the z-axis section of the second shaft 232 may have a polygonal shape. Accordingly, a structure including a circular through-hole may maintain the current state without being rotated while the second shaft 232 rotates, and a structure including a through-hole having an angled shape similar to that of the second shaft 232 may rotate together while the second shaft 232 rotates. For example, the third arm part 222_1 of the second arm member 222, a second fixed cam part 241b of the cam member 241, the second friction plate 252, at least one washer ring (e.g., the second washer ring 249b and the fourth washer ring 249d), the second elastic member 242b, a second fixing part 243_2 of the shaft fixing part 243, and the second coupling member 249e2 (e.g., a second E-ring) may be mounted on the second shaft 232.

Referring to FIGS. 1 to 5, the cam member 241 may include a cam body 241c, the first fixed cam part 241a, and the second fixed cam part 241b. Additionally or alternatively, the cam member 241 may include a first cam hole 241_1h that is formed in the y-axis or -y-axis direction through the central portion of the first fixed cam part 241a and through which the first shaft 231 is inserted such that at least a portion of the first shaft 231 is mounted therein and a second cam hole 241_2h that is formed in the y-axis or -y-axis direction through the central portion of the second fixed cam part 241b and through which the second shaft 232 is inserted such that at least a portion of the second shaft 232 is mounted therein. The cam body 241c may have a certain length, and the first fixed cam part 241a and the second fixed cam part 241b may be disposed at opposite edges of the cam body 241c. A surface of the cam body 241c that faces in one direction (e.g., a surface facing in the y-axis direction) may be disposed to face a surface of the stopper 236 that faces in one direction (e.g., a surface facing in the -y-axis direction).

The first fixed cam part 241a may be disposed at the edge of the cam body 241c that faces in the -x-axis direction. The first fixed cam part 241a may have a cylindrical shape surrounding the first cam hole 241_1h formed through the central portion of the first fixed cam part 241a in the y-axis or -y-axis direction. The first fixed cam part 241a may include a first cam part 241_3 disposed to be engaged with the cam structure formed on the first arm part 221_1 of the first arm member 221 and a first protruding pattern 241_1 that is formed on the opposite side to the first cam part 241_3 and that faces the first friction plate 251. Ridges and valleys may be repeatedly disposed on the first cam part 241_3 in the circumferential direction. The central portion of the first cam hole 241_1h may have a specified shape such that the first shaft 231 passes through the central portion of the first cam hole 241_1h. For example, the central portion of the first cam hole 241_1h may have a circular shape. The first protruding pattern 241_1 of the first fixed cam part 241a may include at least one or a plurality of first crest portions 241_1m that are formed higher than the surroundings and that have flat top portions and a plurality of first support portions 241_1v that are formed flat so as to be lower than the first crest portions 241_1m and that support the at least one or plurality of first crest portions 241_1m. The first crest portions 241_1m may alternate with the first support portions 241_1v. Accordingly, the plurality of first crest portions 241_1m may be spaced apart from one another. Thus, according to an embodiment, the first protruding pattern 241_1 may include a plurality of first crest portions 241_1m configured to further protrude beyond peripheral portions; and a plurality of first support portions 241_1v formed lower than the plurality of first crest portions 241_1m and formed between the plurality of first crest portions 241_1m to form the peripheral portions. Accordingly, the second protruding pattern 241_2 may include a plurality of second crest portions 241_2m configured to further protrude beyond peripheral portions; and a plurality of second support portions 241_2v formed lower than the plurality of second crest portions 241_2m and formed between the plurality of second crest portions 241_2m to form the peripheral portions. The areas of the upper surfaces (e.g., surfaces facing in the -y-axis direction) of the first crest portions 241_1m may be increased toward the outside from the center of the first cam hole 241_1h. Alternatively, the areas of the upper surfaces (e.g., the surfaces facing in the -y-axis direction) of the first crest portions 241_1m may be decreased toward the center of the first cam hole 241_1h from the outside. For example, at least portions of the first crest portions 241_1m may have a fan shape. The first crest portions 241_1m may rise (or protrude) from the first support portions 241_1v in the -y-axis direction, and the boundaries between the first support portions 241_1v and the first crest portions 241_1m may be rounded. According to an embodiment, the sizes of the first crest portions 241_1m may be different from the sizes of the first support portions 241_1v. For example, the sizes of the first crest portions 241_1m may be smaller than the sizes of the first support portions 241_1v.

The second fixed cam part 241b may be disposed at the edge of the cam body 241c that faces in the x-axis direction (or, at a position opposite to or symmetrical to the position of the first fixed cam part 241a with respect to the cam body 241c). The second fixed cam part 241b may have a cylindrical shape surrounding the second cam hole 241_2h formed through the central portion of the second fixed cam part 241b in the y-axis or -y-axis direction. The second cam hole 241_2h may be formed parallel to the first cam hole 241_1h. The second fixed cam part 241b may include a second cam part 241_4 disposed to be engaged with the cam structure formed on the third arm part 222_1 of the second arm member 222 and a second protruding pattern 241_2 that is formed on the opposite side to the second cam part 241_4 and that faces the second friction plate 252. Similarly to the first cam part 241_3, the second cam part 241_4 may have ridges and valleys repeatedly disposed thereon in the circumferential direction. The central portion of the second cam hole 241_2h may have a specified shape such that the second shaft 232 passes through the central portion of the second cam hole 241_2h. For example, similarly to the first cam hole 241_1h, the central portion of the second cam hole 241_2h may have a circular shape. The second protruding pattern 241_2 of the second fixed cam part 241b may include a plurality of second crest portions 241_2m and a plurality of second support portions 241_2v that are similar to the first crest portions 241_1m and the first support portions 241_1v of the first protruding pattern 241_1 described above, and the plurality of second support portions 241_2v may support the plurality of second crest portions 241_2m. The second crest portions 241_2m may alternate with the second support portions 241_2v. Accordingly, the plurality of second crest portions 241_2m may be spaced apart from one another. The areas of the upper surfaces (e.g., surfaces facing in the -y-axis direction) of the second crest portions 241_2m may be increased toward the outside from the center of the second cam hole 241_2h. Alternatively, the areas of the upper surfaces (e.g., the surfaces facing in the -y-axis direction) of the second crest portions 241_2m may be decreased toward the center of the second cam hole 241_2h from the outside. For example, at least portions of the second crest portions 241_2m may have a fan shape. The second crest portions 241_2m may rise (or protrude) from the second support portions 241_2v in the -y-axis direction, and the boundaries between the second support portions 241_2v and the second crest portions 241_2m may be rounded. According to an embodiment, the sizes of the second crest portions 241_2m may be smaller than the sizes of the second support portions 241_2v. Alternatively, the sizes of the second support portions 241_2v may be larger than the sizes of the second crest portions 241_2m.

According to an embodiment, while the first arm member 221 and the second arm member 222 rotate within a certain angle range, the cam member 241 may retreat in one direction (e.g., in the -y-axis direction) in response to a cam operation between the cam structure of the first arm member 221 and the first cam part 241_3 and a cam operation between the cam structure of the second arm member 222 and the second cam part 241_4, and when the ridges and valleys of the cams (e.g., the cam structures and the cam parts) are engaged with each other, the cam member 241 may be moved in the direction opposite to the one direction (e.g., in the y-axis direction) by the elastic forces of the first elastic member 242a and the second elastic member 242b to return to the original position.

According to an embodiment, the first friction plate 251 may be mounted on the first shaft 231 and may be disposed to make contact with the first fixed cam part 241a of the cam member 241. Correspondingly, one surface of the first friction plate 251 may face the first protruding pattern 241_1 of the first fixed cam part 241a. Structurally, the first friction plate 251 may be disposed between a washer ring (e.g., the third washer ring 249c) and the first fixed cam part 241a. The first friction plate 251 may include, in the center thereof, a first substrate hole 251_h through which the first shaft 231 passes and may have a ring shape surrounding the first substrate hole 251_h. The first substrate hole 251_h may have a shape similar to the shape of the z-axis section of the first shaft 231. For example, the z-axis section of the first substrate hole 251_h may have a shape in which upper and lower surfaces are flat and side surfaces are curved. Accordingly, when the first shaft 231 is rotated by the first arm member 221 after inserted through the first substrate hole 251_h, the first friction plate 251 having the first substrate hole 251_h may rotate.

The first friction plate 251 may generate friction while at least partially making contact with the first protruding pattern 241_1 in response to the elastic force provided by the first elastic member 242a. The frictional force between the first friction plate 251 and the first protruding pattern 241_1 may be used to maintain the foldable electronic device 100 at a specific angle or prevent the foldable electronic device 100 from being easily opened in the folded state. In this regard, the first friction plate 251 may include first basic substrate portions 251_v formed to a first distance from the center of the first substrate hole 251_h and first extended substrate portions 251_m formed to a second distance longer than the first distance from the center of the first substrate hole 251_h so as to protrude. The first basic substrate portions 251_v and the first extended substrate portions 251_m may be continuous with each other. The first extended substrate portions 251_m and the first basic substrate portions 251_v may be brought into contact with the first crest portions 241_1m of the first protruding pattern 241_1. The contact surfaces between the first crest portions 241_1m of the first protruding pattern 241_1 and the first extended substrate portions 251_m may be larger than the contact surfaces between the first basic substrate portions 251_v and the first crest portions 241_1m, and thus the frictional force generated by the first extended substrate portions 251_m may be greater than the frictional force generated by the first basic substrate portions 251_v. Alternatively, first contact surfaces between the first basic substrate portions 251_v and the first crest portions 241_1m may be smaller than second contact surfaces between the first extended substrate portions 251_m and the first crest portions 241_1m, and thus the magnitude of a second frictional force generated through the first contact surfaces may be smaller than the magnitude of a first frictional force generated through the second contact surfaces. The first friction plate 251 may be formed of a material (e.g., a metallic material) having a strength above a specified magnitude and a tensile force above a specified magnitude so as to withstand the friction generated during the friction process.

According to an embodiment, the first friction plate 251 may include a plurality of first basic substrate portions 251_v having a surface with a first size; and a plurality of first extended substrate portions 251_m configured to extend from the plurality of first basic substrate portions 251_v and disposed between the plurality of first basic substrate portions 251_v, the plurality of first extended substrate portions 251_m may have a surface with a second size greater than the first size.

According to an embodiment, the second friction plate 252 may include a plurality of second basic substrate portions 252_v having a surface with the first size; and a plurality of second extended substrate portions 252_m configured to extend from the plurality of second basic substrate portions 252_v and disposed between the plurality of second basic substrate portions 252_v, the plurality of second extended substrate portions 252_m may have a surface with the second size greater than the first size.

According to an embodiment, the second friction plate 252 may be mounted on the second shaft 232 and may be disposed to make contact with the second fixed cam part 241b of the cam member 241. Correspondingly, one surface of the second friction plate 252 may face the second protruding pattern 241_2 of the second fixed cam part 241b. Structurally, the second friction plate 252 may be disposed between a washer ring (e.g., the fourth washer ring 249d) and the second fixed cam part 241b. The second friction plate 252 may include, in the center thereof, a second substrate hole 252_h through which the second shaft 232 passes and may have a ring shape surrounding the second substrate hole 252_h. The second substrate hole 252_h may have a shape similar to the shape of the z-axis section of the second shaft 232. For example, the z-axis section of the second substrate hole 252_h may have a shape in which upper and lower surfaces are flat and side surfaces are curved. Accordingly, when the second shaft 232 is rotated by the second arm member 222 after inserted through the second substrate hole 252_h, the second friction plate 252 having the second substrate hole 252_h may rotate in response to the rotation of the second shaft 232.

The second friction plate 252 may generate friction while being at least partially brought into contact with the second protruding pattern 241_2 by the elastic force of the second elastic member 242b. The frictional force between the second friction plate 252 and the second protruding pattern 241_2 may be used to maintain the foldable electronic device 100 at a specific angle (e.g., a flex function) or prevent the foldable electronic device 100 from being easily opened in the folded state (e.g., a detent function). In this regard, the second friction plate 252 may include second basic substrate portions 252_v formed to the first distance from the center of the second substrate hole 252_h (an empty space is formed in the central portion by the second substrate hole 252_h) and second extended substrate portions 252_m formed to the second distance longer than the first distance from the center of the second substrate hole 252_h so as to protrude (an empty space is formed in the central portion by the second substrate hole 252_h as in the second basic substrate portions 252_v). The second basic substrate portions 252_v and the second extended substrate portions 252_m may be continuously arranged while alternating with each other. In response to a hinge operation of the foldable electronic device 100, the second extended substrate portions 252_m and the second basic substrate portions 252_v may be brought into contact with the second crest portions 241_2m of the second protruding pattern 241_2. During the hinge operation of the foldable electronic device 100, the contact surfaces between the second crest portions 241_2m of the second protruding pattern 241_2 and the second extended substrate portions 252_m may be larger than the contact surfaces between the second basic substrate portions 252_v and the second crest portions 241_2m. Correspondingly, the frictional force generated by the second extended substrate portions 252_m may be greater than the frictional force generated by the second basic substrate portions 252_v. Alternatively, first contact surfaces between the second basic substrate portions 252_v and the second crest portions 241_2m may be smaller than second contact surfaces between the second extended substrate portions 252_m and the second crest portions 241_2m. Correspondingly, the magnitude of a second frictional force generated through the first contact surfaces may be smaller than the magnitude of a first frictional force generated through the second contact surfaces. The second friction plate 252 may be formed of a material (e.g., a metallic material) having a strength above a specified magnitude and a tensile force above a specified magnitude so as to withstand the friction generated during the friction process. The above-described second friction plate 252 may have the same structure (e.g., size, shape, and thickness) as the first friction plate 251.

According to an embodiment, the first hinge structure 200a may include a plurality of ring structures (e.g., the first washer ring 249a, the second washer ring 249b, the third washer ring 249c, and the fourth washer ring 249d). The first washer ring 249a may be mounted on one end (e.g., an end facing in the -y-axis direction) of the first shaft 231 and may be disposed between the shaft fixing part 243 and the first coupling member 249e1. The second washer ring 249b may be mounted on one end (e.g., an end facing in the -y-axis direction) of the second shaft 232 and may be disposed between the shaft fixing part 243 and the second coupling member 249e2. The first washer ring 249a and the second washer ring 249b may support the first coupling member 249e1 and the second coupling member 249e2, respectively, or may prevent the first shaft 231 and the second shaft 232 from being separated from the respective fixing parts of the shaft fixing part 243. The third washer ring 249c may have, in the central portion thereof, a hole through which the first shaft 231 passes and may be disposed between the first elastic member 242a and the first friction plate 251. The third washer ring 249c may serve to receive pressure applied to the first friction plate 251 by the first elastic member 242a and transmit the pressure to the first friction plate 251. The fourth washer ring 249d may perform the same role as the third washer ring 249c. For example, the fourth washer ring 249d may have, in the central portion thereof, a hole through which the second shaft 232 passes and may be disposed between the second elastic member 242b and the second friction plate 252. The fourth washer ring 249d may serve to evenly receive pressure applied to the second friction plate 252 by the second elastic member 242b and transmit the pressure to the second friction plate 252. The plurality of ring structures (e.g., the first washer ring 249a, the second washer ring 249b, the third washer ring 249c, and the fourth washer ring 249d) may have circular central portions and thus may maintain the current states even when the first shaft 231 and the second shaft 232 rotate.

According to an embodiment, the first elastic member 242a may have a coil spring shape with an empty space inside. At least a portion of the body of the first shaft 231 passing through the first fixed cam part 241a may be seated in the central portion of the first elastic member 242a. The first elastic member 242a may be disposed between the cam member 241 and the shaft fixing part 243 and may act to push the cam member 241 in one direction (e.g., the y-axis direction) as the shaft fixing part 243 fixed. In this process, the first elastic member 242a may exert an elastic force to push the first friction plate 251 toward the first protruding pattern 241_1 of the cam member 241 through the third washer ring 249c. Accordingly, the first friction plate 251 may be brought into contact with the first protruding pattern 241_1 and may generate different magnitudes of frictional forces depending on the rotation angle while rotating in response to rotation of the first shaft 231. For example, when the first extended substrate portions 251_m of the first friction plate 251 make contact with the first crest portions 241_1m, the first friction plate 251 may generate a frictional force having a first magnitude, and when the first basic substrate portions 251_v of the first friction plate 251 make contact with the first crest portions 241_1m, the first friction plate 251 may generate a frictional force having a second magnitude (e.g., a magnitude smaller than the first magnitude).

According to an embodiment, the second elastic member 242b may be spaced apart from the first elastic member 242a by a specified gap and may be disposed to make contact with one surface of the second fixed cam part 241b. The second elastic member 242b may exert an elastic force to push the second friction plate 252 toward the second protruding pattern 241_2 of the cam member 241 through the fourth washer ring 249d. Accordingly, the second friction plate 252 may be brought into contact with the second protruding pattern 241_2 and may generate different magnitudes of frictional forces depending on the rotation angle while rotating in response to rotation of the second shaft 232. For example, when the second extended substrate portions 252_m of the second friction plate 252 make contact with the second crest portions 241_2m, the second friction plate 252 may generate a frictional force having a first magnitude, and when the second basic substrate portions 252_v of the second friction plate 252 make contact with the second crest portions 241_2m, the second friction plate 252 may generate a frictional force having a second magnitude (e.g., a magnitude smaller than the first magnitude). Within a certain range, the elastic force generated by the second elastic member 242b may be similar to the elastic force generated by the first elastic member 242a.

The shaft fixing part 243 may include a shaft body 243_3, the first fixing part 243_1 having a first shaft hole formed therein, and the second fixing part 243_2 having a second shaft hole formed therein. The shaft body 243_3 may include a through-hole that penetrates the shaft body 243_3 in the up-down direction (e.g., in the -z-axis direction from one point on the z-axis) and that is used to fix the shaft fixing part 243 to the hinge housing 150. The first shaft hole formed in the first fixing part 243_1 may be formed through the first fixing part 243_1 in the y-axis or -y-axis direction, and the first shaft 231 may be inserted through the first shaft hole. Unlike the z-axis section of the first shaft 231, the first shaft hole may have a cylindrical shape. The first fixing part 243_1 may support one side of the first elastic member 242a. The second shaft hole formed in the second fixing part 243_2 may be disposed parallel to the first shaft hole with respect to the y-axis and may be formed through the second fixing part 243_2 in the y-axis or -y-axis direction, and the second shaft 232 may be inserted through the second shaft hole. Unlike the z-axis section of the second shaft 232, the second shaft hole may have a cylindrical shape. The second fixing part 243_2 may support one side of the second elastic member 242b.

According to an embodiment, the first main gear 233a may be disposed on one side of the first shaft 231. The first main gear 233a may be disposed in a form integrated with the first shaft 231 and may be protected by the stopper 236. For example, the first main gear 233a may be disposed between one side of the lower fixed bracket 213a in the -y-axis direction and one side of the stopper 236. The second main gear 233b may be disposed on one side of the second shaft 232. The second main gear 233b may be disposed in a form integrated with the second shaft 232 and may be protected by the stopper 236. For example, the second main gear 233b may be disposed between an opposite side of the lower fixed bracket 213a in the -y-axis direction and an opposite side of the stopper 236. The first idle gear 234a may be disposed between the first main gear 233a and the second main gear 233b. One side of the first idle gear 234a may be engaged with the first main gear 233a and, an opposite side of the first idle gear 234a may be engaged with the second idle gear 234b. The first idle gear 234a may include a protrusion inserted into a guide hole formed in the upper fixed bracket 213b and a protrusion (or, a shaft) fixed to a surface of the stopper 236 that faces in one direction (e.g., a surface facing in the -y-axis direction). The second idle gear 234b may be disposed between the first main gear 233a and the second main gear 233b. One side of the second idle gear 234b may be engaged with the first idle gear 234a, and an opposite side of the second idle gear 234b may be engaged with the second main gear 233b. The second idle gear 234b may have substantially the same shape and size as the first idle gear 234a. Accordingly, the second idle gear 234b may include a protrusion inserted into a guide hole formed in the upper fixed bracket 213b and a protrusion (or, a shaft) fixed to a surface of the stopper 236 that faces in one direction (e.g., a surface facing in the -y-axis direction). The first main gear 233a, the second main gear 233b, the first idle gear 234a, and the second idle gear 234b may be used to share the rotational force of the first shaft 231 and the rotational force of the second shaft 232.

The first type hinge structure 200a and 200b has been described with the structure of the first hinge structure 200a as an example. However, the invention is not limited thereto, and a hinge structure using a friction plate may be at least one hinge structure among the hinge structures. For example, the structure of FIG. 5 applied to the cam member 241 and the friction plates 251 and 252 described above may be applied to both the first hinge structure 200a and the second hinge structure 200b, or may be applied to only one of the first and second hinge structures 200a and 200b.

As described above, in the foldable electronic device 100 of the invention, at least one friction plate may be applied to the first type hinge structure 200a and 200b to differentially apply frictional forces in the flex mode and the detent mode. Accordingly, the foldable electronic device 100 may be made slim, and the structure of the cam member 241 may be simplified. In addition, by providing different frictional forces above a certain magnitude depending on rotation states such that the shapes of the cam parts are made smaller, the foldable electronic device may support more stable operation of the detent mode and the flex mode.

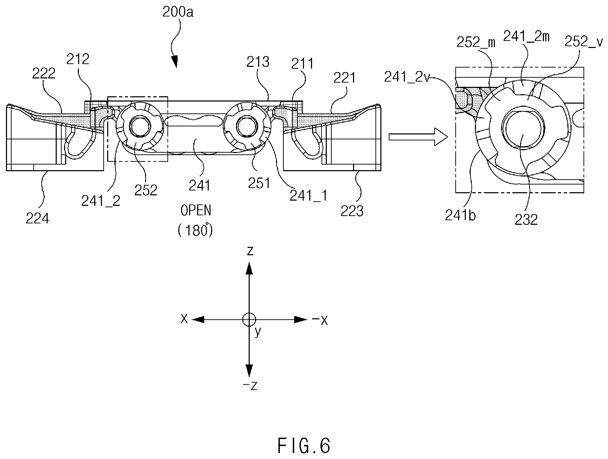

FIG. 6 is a view illustrating a state of the hinge structure and an overlapping state of the friction plates and the cam member in an unfolded state of the foldable electronic device according to an embodiment.

Referring to FIGS. 1 to 6, the foldable electronic device 100 may include, for example, at least the first rotation member 211 and the second rotation member 212 that are fastened to the fixed bracket 213, the first arm member 221, the second arm member 222, the first link member 215 fixing the first rotation member 211 to the first housing 110, the second link member 216 fixing the second rotation member 212 to the second housing 120, the third link member 223 fixing the first arm member 221 to the first housing 110, and the fourth link member 224 fixing the second arm member 222 to the second housing 120. In relation to providing pressure required for a specific state of the foldable electronic device 100, the foldable electronic device 100 may include the cam member 241 and the friction plates 251 and 252.

As illustrated, the foldable electronic device 100 may have an unfolded state. For example, the first link member 215 and the third link member 223, which are fixed to the first housing 110, may be disposed to be symmetrical to the second link member 216 and the fourth link member 224 with respect to the central portion of the foldable electronic device 100 (e.g., the folding portion of the display 160), and the distance between the end of the first link member 215 (or, the third link member 223) in the -x-axis direction and the end of the second link member 216 (or, the fourth link member 224) in the x-axis direction may form a first distance (or, the longest distance).

When the above-described foldable electronic device 100 is in the unfolded state (or, when the display 160 is in an unfolded state, when the first housing 110 and the second housing 120 are in an unfolded state, or when the distance between the ends of the link members in the unfolding direction is longest), the basic substrate portions of the friction plates 251 and 252 (e.g., the second basic substrate portions 252_v of the second friction plate 252) may be brought into contact with the crest portions of the protruding patterns of the cam member 241 (e.g., the second crest portions 241_2m of the second protruding pattern 241_2). For example, while the second basic substrate portions 252_v are in contact with the second crest portions 241_2m, gaps (or, empty spaces) may be formed between the second extended substrate portions 252_m and the second support portions 241_2v. Since the second substrate hole 252_h of the second friction plate 252 has a shape that is the same as or similar to the shape of the z-axis section (e.g., at least partially angled section) of the second shaft 232, the second friction plate 252 may rotate in response to rotation of the second shaft 232. The magnitude of a frictional force (e.g., a basic frictional force) depending on the sizes of the contact surfaces between the second crest portions 241_2m of the second protruding pattern 241_2 and the second basic substrate portions 252_v (e.g., the sizes of basic contact surfaces) may be smaller than the magnitude of a frictional force (e.g., an extended frictional force) depending on the sizes of the contact surfaces between the second extended substrate portions 252_m and the second crest portions 241_2m (e.g., the sizes of extended contact surfaces). Alternatively, since the sizes of the basic contact surfaces are smaller than the sizes of the extended contact surfaces, there may be a difference between the magnitudes of the frictional forces. While the foldable electronic device 100 is folded to less than a first angle in the unfolded state, the sizes of the contact surfaces (e.g., the basic contact surfaces) between the second basic substrate portions 252_v and the second crest portions 241_2m may be maintained.

Although the situation in which the second friction plate 252 and the second protruding pattern 241_2 face each other (or, make contact with each other) has been described above, a situation in which the first friction plate 251 and the first protruding pattern 241_1 face each other (or, make contact with each other) may also be the same as or similar to that of the second friction plate 252.

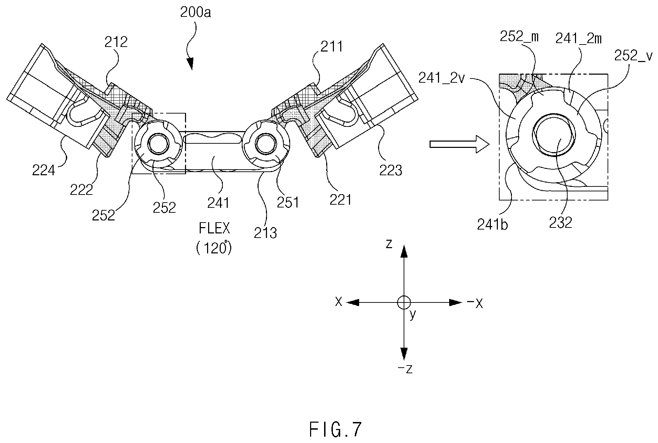

FIG. 7 is a view illustrating a state of the hinge structure and an overlapping state of the friction plates and the cam member in a state in which the foldable electronic device is folded with the first angle according to an embodiment.

Referring to FIGS. 1 to 7, the foldable electronic device 100 may include, for example, at least the first rotation member 211 and the second rotation member 212 that are fastened to the fixed bracket 213, the first arm member 221, the second arm member 222, the first link member 215 fixing the first rotation member 211 to the first housing 110, the second link member 216 fixing the second rotation member 212 to the second housing 120, the third link member 223 fixing the first arm member 221 to the first housing 110, and the fourth link member 224 fixing the second arm member 222 to the second housing 120. In relation to providing pressure required for a specific state of the foldable electronic device 100, the foldable electronic device 100 may include the cam member 241 and the friction plates 251 and 252.

When external pressure is applied to the foldable electronic device 100 in the unfolded state, as illustrated, the foldable electronic device 100 may have a first angle state (e.g., a state in which the included angle between the first housing 110 and the second housing 120 is 120 degrees or a state in which the first rotation member 211 (or, the first arm member 221, the first link member 215, or the third link member 223) and the second rotation member 212 (or, the second arm member 222, the second link member 216, or the fourth link member 224) are opened with an angle of 120 degrees with respect to one point of the fixed bracket 213). Here, 120 degrees mentioned as an example of the first angle state may be changed depending on a design change, and for example, the first angle may be at least one specific angle between 160 degrees and 70 degrees. In the first angle state, the distance between the end of the first link member 215 (or, the third link member 223), which is fixed to the first housing 110, in the -x-axis direction and the end of the second link member 216 (or, the fourth link member 224) in the x-axis direction may form a second distance (or, a distance shorter than the first distance (or, the longest distance) in the unfolded state).

When the above-described foldable electronic device 100 is in the first angle state (or, when the distance between the ends of the symmetrically disposed link members in the unfolding direction is equal to the second distance shorter than the first distance (or, the longest distance)), the extended substrate portions of the friction plates 251 and 252 (e.g., the second extended substrate portions 252_m of the second friction plate 252) may be at least partially brought into contact with the crest portions of the protruding patterns of the cam member 241 (e.g., the second crest portions 241_2m of the second protruding pattern 241_2). For example, while the second extended substrate portions 252_m are in contact with the second crest portions 241_2m, gaps (or, empty spaces) may be formed between the second basic substrate portions 252_v and the second support portions 241_2v. According to an embodiment, since the second substrate hole 252_h of the second friction plate 252 has a shape that is the same as or similar to the shape of the z-axis section (e.g., at least partially angled section) of the second shaft 232, the second friction plate 252 may rotate in response to rotation of the second shaft 232. As the second friction plate 252 rotates, the contact areas between the second extended substrate portions 252_m and the second crest portions 241_2m may be gradually increased, and the sizes of the overlapping regions between the second extended substrate portions 252_m and the second support portions 241_2v (or, empty spaces or non-contact regions between the second extended substrate portions 252_m and the second crest portions 241_2m) may be gradually decreased. According an embodiment, the magnitude of the frictional force by the second friction plate 252 may be gradually increased as the second extended substrate portions 252_m start to make contact with the second crest portions 241_2m, and the frictional force may have the largest magnitude when the second extended substrate portions 252_m are disposed to entirely cover the second crest portions 242_2m. As the second friction plate 252 rotates, the sizes of the contact surfaces between the second basic substrate portions 252_v and the second crest portions 241_2m may be gradually decreased, and the sizes of the overlapping regions between the second basic substrate portions 252_v and the second support portions 241_2v (or, empty spaces or non-contact regions between the second basic substrate portions 252_v and the second crest portions 241_2m) may be gradually increased. As described above, while the frictional force by the basic substrate portions is decreased, the frictional force by the extended substrate portions may be increased, and thus the magnitude of the overall frictional force may be increased.

Since the second friction plate 252 includes the plurality of extended substrate portions and the second protruding pattern 241_2 includes the plurality of crest portions, the change in the contact surfaces between the second extended substrate portions 252_m and the second crest portions 241_2m (or, the second support portions 241_2v) (or, the change in the contact surfaces between the second basic substrate portions 252_v and the second support portions 241_2v) may simultaneously occur in the plurality of extended substrate portions.

Although the situation in which the second friction plate 252 and the second protruding pattern 241_2 face each other (or, make contact with each other) has been described above, a situation in which the first friction plate 251 and the first protruding pattern 241_1 face each other (or, make contact with each other) may also be the same as or similar to that of the second friction plate 252.

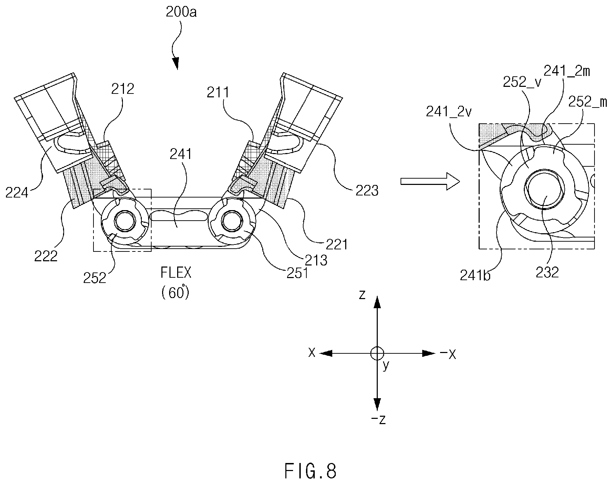

FIG. 8 is a view illustrating a state of the hinge structure and an overlapping state of the friction plates and the cam member in a state in which the foldable electronic device is folded with a second angle according to an embodiment.

Referring to FIGS. 1 to 8, the foldable electronic device 100 may include, for example, at least the first rotation member 211 and the second rotation member 212 that are fastened to the fixed bracket 213, the first arm member 221, the second arm member 222, the first link member 215 fixing the first rotation member 211 to the first housing 110, the second link member 216 fixing the second rotation member 212 to the second housing 120, the third link member 223 fixing the first arm member 221 to the first housing 110, and the fourth link member 224 fixing the second arm member 222 to the second housing 120. In relation to providing pressure required for a specific state of the foldable electronic device 100, the foldable electronic device 100 may include the cam member 241 and the friction plates 251 and 252.

When external pressure is additionally applied to the foldable electronic device 100 in the first angle state, as illustrated, the foldable electronic device 100 may have a second angle state (e.g., a state in which the included angle between the first housing 110 and the second housing 120 is 60 degrees or a state in which the first rotation member 211 (or, the first arm member 221, the first link member 215, or the third link member 223) and the second rotation member 212 (or, the second arm member 222, the second link member 216, or the fourth link member 224) are opened with an angle of 60 degrees with respect to one point of the fixed bracket 213). Here, 60 degrees mentioned as an example of the second angle state may be changed depending on a design change, and for example, the second angle may be at least one specific angle between a specific angle that does not overlap he first angle state and an angle greater than 0 degrees. In the second angle state, the distance between the end of the first link member 215 (or, the third link member 223), which is fixed to the first housing 110, in the -x-axis direction and the end of the second link member 216 (or, the fourth link member 224) in the x-axis direction may form a third distance (or, a distance shorter than the second distance in the first angle state).

When the above-described foldable electronic device 100 is in the second angle state (or, when the distance between the ends of the symmetrically disposed link members in the unfolding direction is equal to the third distance shorter than the second distance (or, the second distance in the first angle state)), the extended substrate portions of the friction plates 251 and 252 (e.g., the second extended substrate portions 252_m of the second friction plate 252) may be at least partially brought into contact with the crest portions of the protruding patterns of the cam member 241 (e.g., the second crest portions 241_2m of the second protruding pattern 241_2). For example, the contact areas between the second extended substrate portions 252_m and the second crest portions 241_2m may be gradually decreased as the second friction plate 252 rotates depending on rotation of the second shaft 232. Alternatively, the overlapping regions between the second basic substrate portions 252_v and the second support portions 241_2v may be decreased as the overlapping regions between the second extended substrate portions 252_m and the second support portions 241_2v are increased (or, the non-contact regions between the second extended substrate portions 252_m and the second crest portions 241_2m are gradually increased) depending on the rotation of the second friction plate 252. In another case, the sizes of the contact regions between the second basic substrate portions 252_v and the second crest portions 241_2m may be gradually increased depending on the rotation of the second friction plate 252. The frictional force of the first hinge structure 200a may be increased as the sizes of the contact surfaces or the contact regions are increased and may be decreased as the sizes of the contact surfaces or the contact regions are decreased.

Since the second friction plate 252 includes the plurality of extended substrate portions and the second protruding pattern 241_2 includes the plurality of crest portions, the change in the contact surfaces between the second extended substrate portions 252_m and the second crest portions 241_2m (or, the second support portions 241_2v) (or, the change in the contact surfaces between the second basic substrate portions 252_v and the second support portions 241_2v) may simultaneously occur in the plurality of extended substrate portions.

Although the situation in which the second friction plate 252 and the second protruding pattern 241_2 face each other (or, make contact with each other) has been described above, a situation in which the first friction plate 251 and the first protruding pattern 241_1 face each other (or, make contact with each other) may also be the same as or similar to that of the second friction plate 252.

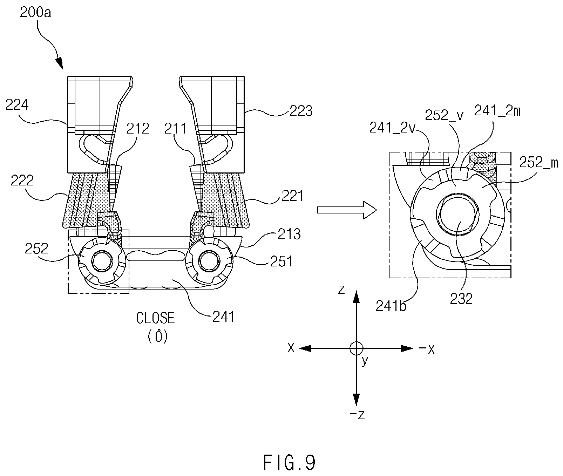

FIG. 9 is a view illustrating a state of the hinge structure and an overlapping state of the friction plates and the cam member in a folded state of the foldable electronic device according to an embodiment.

Referring to FIGS. 1 to 9, the foldable electronic device 100 may include, for example, at least the first rotation member 211 and the second rotation member 212 that are fastened to the fixed bracket 213, the first arm member 221, the second arm member 222, the first link member 215 fixing the first rotation member 211 to the first housing 110, the second link member 216 fixing the second rotation member 212 to the second housing 120, the third link member 223 fixing the first arm member 221 to the first housing 110, and the fourth link member 224 fixing the second arm member 222 to the second housing 120. In relation to providing pressure required for a specific state of the foldable electronic device 100, the foldable electronic device 100 includes the cam member 241 and the friction plates 251 and 252.

As illustrated, the foldable electronic device 100 may have a folded state. For example, the first link member 215 and the third link member 223, which are fixed to the first housing 110, may be disposed to be symmetrical to the second link member 216 and the fourth link member 224 with respect to the central portion of the foldable electronic device 100 (e.g., the folding portion of the display 160), and the distance between the end of the first link member 215 (or, the third link member 223) in the -x-axis direction and the end of the second link member 216 (or, the fourth link member 224) in the x-axis direction may form a fourth distance (or, the shortest distance).

When the above-described foldable electronic device 100 is in the folded state (or, when the display 160 is in a folded state, when the first housing 110 and the second housing 120 are in a folded state, or when the distance between the ends of the link members in the z-axis direction is shortest), the basic substrate portions of the friction plates 251 and 252 (e.g., the second basic substrate portions 252_v of the second friction plate 252) may be brought into contact with the crest portions of the protruding patterns of the cam member 241 (e.g., the second crest portions 241_2m of the second protruding pattern 241_2). For example, while the second basic substrate portions 252_v are in contact with the second crest portions 241_2m, gaps (or, empty spaces) may be formed between the second extended substrate portions 252_m and the second support portions 241_2v. While the foldable electronic device 100 is changed from the previous second angle state to the folded state, the contact areas between the second extended substrate portions 252_m and the second crest portions 241_2m may be gradually decreased in response to the rotation of the second friction plate 252, and the contact areas between the second basic substrate portions 252_v and the second crest portions 241_2m may be gradually increased in response to the rotation of the second friction plate 252. In response to the rotation of the second friction plate 252, the overlapping regions between the second extended substrate portions 252_m and the second support portions 241_2v (or, the empty spaces between the second extended substrate portions 252_m and the second support portions 241_2v) may be gradually increased, and the overlapping regions between the second basic substrate portions 252_v and the second support portions 241_2v (or, the empty spaces between the second basic substrate portions 252_v and the second support portions 241_2v) may be gradually decreased. As the contact surfaces between the second extended substrate portions 252_m and the second crest portions 241_2m are decreased, the frictional force of the first hinge structure 200a may be gradually decreased and may be minimized in the folded state.

Since the second friction plate 252 includes the plurality of extended substrate portions and the second protruding pattern 241_2 includes the plurality of crest portions, the change in the contact surfaces between the second extended substrate portions 252_m and the second crest portions 241_2m (or, the second support portions 241_2v) (or, the change in the contact surfaces between the second basic substrate portions 252_v and the second support portions 241_2v) may simultaneously occur in the plurality of extended substrate portions.

Although the situation in which the second friction plate 252 and the second protruding pattern 241_2 face each other (or, make contact with each other) has been described above, a situation in which the first friction plate 251 and the first protruding pattern 241_1 face each other (or, make contact with each other) may also be the same as or similar to that of the second friction plate 252.

As described above, the friction areas (or, the contact areas) of the friction plates in the unfolded (e.g., flat or open) state and the folded (e.g., closed) state of the foldable electronic device 100 may be minimized, and thus the detent resistances in the corresponding states may be lowered to a specified magnitude or less. In addition, the friction plates having contact areas varying depending on the rotation of the foldable electronic device 100 described above may maximize the friction areas (or, the contact areas) in the flex section (a specific mounting angle of the foldable electronic device (e.g., a section of 60° to 120°)) to increase the frictional force in the flex mode, thereby maintaining a more stable mounting state.

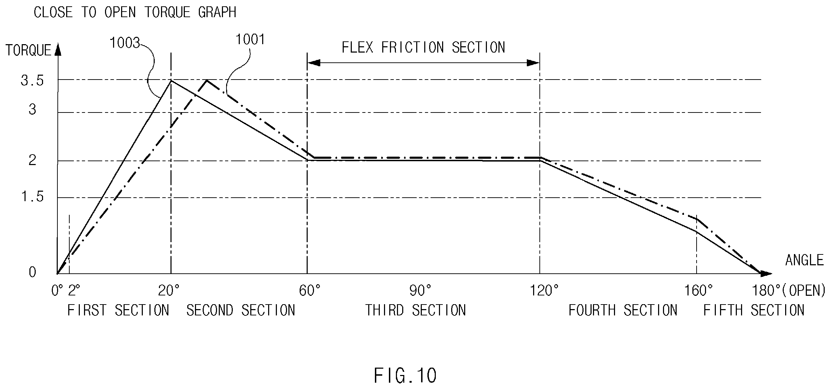

FIG. 10 is a graph depicting a change in torque depending on a change of state of foldable electronic devices from a folded state to an unfolded state according to an embodiment.

Referring to FIGS. 1 to 10, a first graph 1001 depicts a torque change of a basic hinge structure including donut-shaped friction plates. The donut-shaped friction plates may include, for example, friction plates having the same areas as those of fixed cam parts of a cam member in the y-axis direction. Alternatively, the donut-shaped friction plates may include friction plates that generate a uniform frictional force irrespective of rotation of the friction plates. A second graph 1003 depicts a torque change of an improved hinge structure including friction plates having contact areas varying depending on rotation of the friction plates (a hinge structure to which the friction plates according to the embodiments of the invention are applied).

It can be seen that in a first section (a section in which the open angles of the hinge structures range from 0 degrees to 20 degrees), the slope of the torque change in the first graph 1001 corresponding to the basic hinge structure is smaller than the slope of the torque change in the second graph 1003 corresponding to the improved hinge structure. Alternatively, it can be seen that the torque change of the foldable electronic device 100 equipped with the improved hinge structure is greater than the torque change of the foldable electronic device equipped with the basic hinge structure. In addition, it can be seen that the improved hinge structure reaches the maximum torque at a smaller angle than the basic hinge structure.

It can be seen that in a second section (a section in which the open angles of the hinge structures range from 20 degrees to 60 degrees), the slope of the torque change in the second graph 1003 is gentler than the slope of the torque change in the first graph 1001.

It can be seen that in a third section (a section in which the open angles of the hinge structures range from 60 degrees to 120 degrees), the torque change in the first graph 1001 and the torque change in the second graph 1003 appear the same. Accordingly, in a flex mode (or, a mounting mode in which an open state is maintained at a specified angle), the foldable electronic device 100 equipped with the improved hinge structure may provide the same frictional force as the foldable electronic device equipped with the basic hinge structure and thus may support maintaining a stable mounting angle.

It can be seen that in a fourth section (a section in which the open angles of the hinge structures range from 120 degrees to 160 degrees), the slope of the second graph 1003 is greater than the slope of the first graph 1001. Through the fourth section, the foldable electronic device having the improved hinge structure may be more rapidly unfolded than the foldable electronic device having the basic hinge structure.

It can be seen that in a fifth section (a section in which the open angles of the hinge structures range from 160 degrees to 180 degrees), the slope of the second graph 1003 is greater than the slope of the first graph 1001. In addition, it can be seen that in the first graph 1001, the slope of the torque is changed at an angle of 160 degrees, whereas in the second graph 1003, the slope of the torque is not changed at an angle of 160 degrees almost at all. Accordingly, while being more rapidly unfolded than the foldable electronic device having the basic hinge structure, the foldable electronic device having the improved hinge structure may provide a natural unfolding feeling unlike the foldable electronic device having the basic hinge structure that provides a separate feeling of being stopped at an angle of 160 degrees.

As described above, the foldable electronic device having the basic hinge structure applied thereto may include the donut-shaped friction plates to increase the torque (the frictional force) in the flex mode. However, the torque of close detent (open from 0 degrees to 2 degrees) is decreased, and the torque of open detent (e.g., a point of 160 degrees) is increased. As a result, in the case of the foldable electronic device including the basic hinge structure, a force for closing is reduced, and a force required to open the foldable electronic device is greater than the existing force. In contrast, since the foldable electronic device including the improved hinge structure of the invention includes the modified friction plates (or, the friction plates having a frictional force varying depending on rotation of the friction plates), the foldable electronic device may maintain high torque in the flex section while maintaining the detent torque (close = 1.5 to 1.8, and open = 0.9) as high as possible.

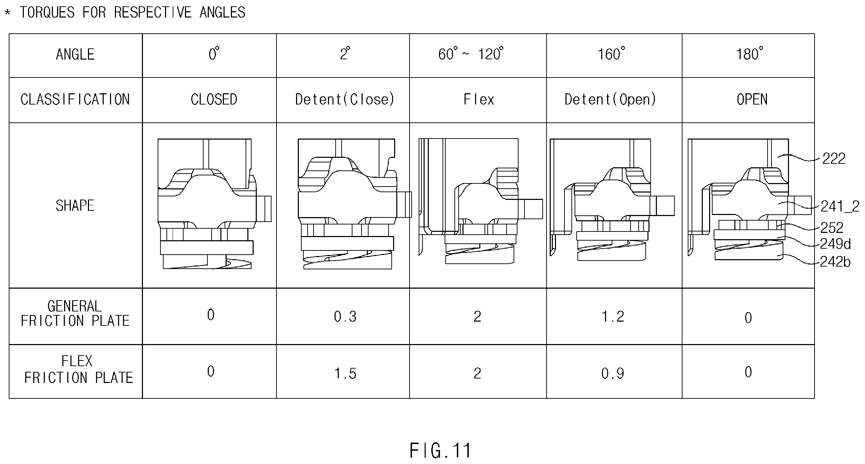

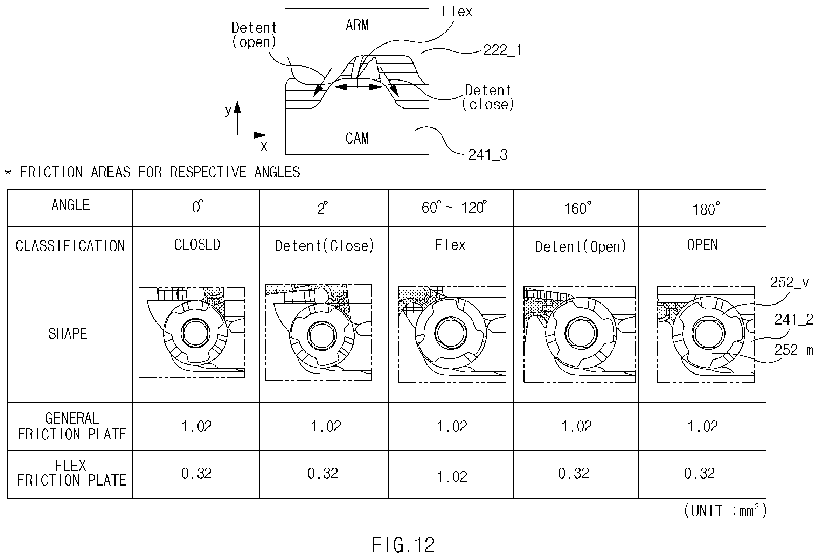

FIG. 11 is a view illustrating torque values for respective angles of the foldable electronic device according to an embodiment, and FIG. 12 is a view illustrating friction areas for respective angles of the foldable electronic device according to an embodiment.

Referring to FIGS. 1 to 11, it can be seen that in the case of a hinge structure including basic friction plates (e.g., donut-shaped friction plates), the torque is 0.3 at an angle of 2 degrees (detent-close), 2 at an angle of 60 degrees to 120 degrees, and 1.2 at an angle of 160 degrees (detent-open). In addition, it can be seen that in the case of a hinge structure including improved friction plates (e.g., the friction plates of the invention that have contact surfaces varying depending on rotation of the friction plates), the torque is 1.5 at an angle of 2 degrees (detent-close), 2 at an angle of 60 degrees to 120 degrees, and 0.9 at an angle of 160 degrees (detent-open).

Referring to FIGS. 1 to 12, it can be seen that in the case of the hinge structure including the basic friction plates, the friction area has a constant value of 1.02 irrespective of a closed state (or, a folded state), a state of 2 degrees (detent-close), a state of 60 degrees to 120 degrees, a state of 160 degrees (detent-open), and an open state (or, an unfolded state) and in the case of the hinge structure having the improved friction plates applied thereto, the friction area is 0.32 from the closed state to the state of 2 degrees (detent-close), 1.02 in the state of 60 degrees to 120 degrees, and 0.32 from the state of 160 degrees (detent-open) to the open state.

As described above, when the improved friction plates are used, the foldable electronic device may be opened with less force, may provide a stable mounting angle using a high frictional force in the flex mode, and may be more smoothly unfolded at a fully unfolded angle. While the cam member 241 and the cam structures of the arm members 221 and 222 perform a cam operation, the detent operation may be performed in an inclination angle state of the protrusions of the cam member 241 and the cam structures of the arm members 221 and 222. Accordingly, when the frictional force of the friction plates is provided, the detent force may be reduced. In the case of the flex section, the crests of the protrusions of the cam member 241 and the crests of the cam structures of the arm members 221 and 222 may rotate. Accordingly, a force may be increased by the frictional force of the friction plates, and thus the mounting angle may be maintained with a greater force. When the improved friction plates of the invention are applied, the friction area in the detent section may be reduced to a specified size or less (e.g., 1/3 or less), as compared with when the basic friction plates are applied. Accordingly, the detent function may be maintained or improved by reducing the influence of the friction plates. In addition, the frictional force may be increased in the flex function, and thus the mounting angle may be maintained with a greater force. Even though the size of the cam member is reduced in the process of implementing the slim foldable electronic device so that the frictional force by the cam operation is reduced, the disturbing frictional force in the detent operation may be reduced when the improved friction plates of the invention (e.g., the friction plates of FIGS. 1 to 10 that have contact areas varying depending on the rotation of the friction plates) are applied. Accordingly, the sensitivity of the closing and opening process may be improved, and the frictional force required for maintaining the angle in the flex operation may be increased.

A foldable electronic device (or, a portable electronic device, a portable communication device, a foldable electronic device, or a foldable electronic device having a communication function) may include a display 160, a first housing 110 and a second housing 120 in each of which at least a portion of the display is accommodated, at least one hinge structure 200a or 200b that connects the first housing and the second housing, and a hinge housing on which the at least one hinge structure is seated. The at least one hinge structure may include a fixed bracket 213 at least partially seated on the hinge housing, a first rotation member 211 and a second rotation member 212 coupled to the fixed bracket, a first arm member 221 that includes a first cam structure and rotates in response to rotation of the first rotation member, a second arm member 222 that includes a second cam structure and rotates in response to rotation of the second rotation member, a first shaft 231 fastened to the first arm member 221, a second shaft 232 fastened to the second arm member 222, a shaft fixing part 243 that fixes the first shaft and the second shaft, a first elastic member 242a disposed between the first shaft and the shaft fixing part, a second elastic member 242b disposed between the second shaft and the shaft fixing part, a cam member 241 including a first fixed cam part 241a having, on one side thereof, a first cam part fastened with the first cam structure of the first arm member and a second fixed cam part 241b having, on one side thereof, a second cam part fastened to the second cam structure of the second arm member, a first friction plate 251 that is disposed between the first elastic member and the cam member and that rotates depending on rotation of the first shaft, and a second friction plate 252 that is disposed between the second elastic member and the cam member and that rotates depending on rotation of the second shaft. The first fixed cam part may include a first protruding pattern 241_1 formed on an opposite side of the first fixed cam part and at least partially brought into contact with the first friction plate. The second fixed cam part may include a second protruding pattern 241_2 formed on an opposite side of the second fixed cam part and at least partially brought into contact with the second friction plate. A size of a contact surface of the first friction plate brought into contact with the first protruding pattern may vary depending on rotation of the first friction plate, and a size of a contact surface of the second friction plate brought into contact with the second protruding pattern may vary depending on rotation of the second friction plate.

According to an embodiment, a contact area between the first friction plate and the first protruding pattern may have a first size while the foldable electronic device is unfolded to a first angle in a folded state, and the contact area between the first friction plate and the first protruding pattern may be gradually increased to have a second size greater than the first size while the foldable electronic device is unfolded from a second angle greater than the first angle to a third angle.

According to an embodiment, the contact area between the first friction plate and the first protruding pattern may be gradually decreased to have the first size smaller than the second size while the foldable electronic device is unfolded from the third angle to 180 degrees.

According to an embodiment, the first protruding pattern may include a first crest portion that further protrudes beyond a peripheral portion and a first support portion formed lower than the first crest portion to form the peripheral portion. The second protruding pattern may include a second crest portion that further protrudes beyond a peripheral portion and a second support portion formed lower than the second crest portion to form the peripheral portion.

According to an embodiment, a protruding upper end portion of the first crest portion and a protruding upper end portion of the second crest portion may be formed flat.

According to an embodiment, the first crest portion may have a gradually increasing area from the center of the first fixed cam part toward the outside, and the second crest portion may have a gradually increasing area from the center of the second fixed cam part toward the outside.

According to an embodiment, the first friction plate may include a first basic substrate portion having a surface with a first size and a first extended substrate portion that extends from the first basic substrate portion and has a surface with a second size greater than the first size. The second friction plate may include a second basic substrate portion having a surface with the first size and a second extended substrate portion that extends from the second basic substrate portion and has a surface with the second size greater than the first size.

According to an embodiment, an edge arc of the first basic substrate portion may have a greater length than an edge arc of the first extended substrate portion, and an edge arc of the second basic substrate portion may have a greater length than an edge arc of the second extended substrate portion.

According to an embodiment, the first protruding pattern may include a plurality of first crest portions that further protrude beyond peripheral portions and a plurality of first support portions formed lower than the plurality of first crest portions and formed between the plurality of first crest portions to form the peripheral portions. The second protruding pattern may include a plurality of second crest portions that further protrude beyond peripheral portions and a plurality of second support portions formed lower than the plurality of second crest portions and formed between the plurality of second crest portions to form the peripheral portions.

According to an embodiment, the first friction plate may include a plurality of first basic substrate portions having a surface with a first size and a plurality of first extended substrate portions that extend from the plurality of first basic substrate portions and have a surface with a second size greater than the first size and that are disposed between the plurality of first basic substrate portions. The second friction plate may include a plurality of second basic substrate portions having a surface with the first size and a plurality of second extended substrate portions that extend from the plurality of second basic substrate portions and have a surface with the second size greater than the first size and that are disposed between the plurality of second basic substrate portions.

According to an embodiment, a section of the first shaft and a section of the second shaft may include at least one angled shape. The first friction plate may include a first substrate hole having a shape the same as or similar to the section of the first shaft, and the second friction plate may include a second substrate hole having a shape the same as or similar to the section of the second shaft.

According to an embodiment, the foldable electronic device may further include a first washer ring disposed between the first friction plate and the first elastic member and a second washer ring disposed between the second friction plate and the second elastic member.

According to an embodiment, the foldable electronic device may further include a fixed friction plate brought into contact with one side of the first friction plate and one side of the second friction plate. The fixed friction plate may include a substrate body, a first fixed substrate part disposed at an edge that extends from the substrate body in a first direction, and a second fixed substrate part disposed at an edge that extends from the substrate body in a second direction.

According to an embodiment, the first fixed substrate part may include a first basic fixed substrate portion having a surface with a first size and a first extended fixed substrate portion that extends from the first basic fixed substrate portion and has a surface with a second size greater than the first size. The second fixed substrate part may include a second basic fixed substrate portion having a surface with the first size and a second extended fixed substrate portion that extends from the second basic fixed substrate portion and has a surface with the second size greater than the first size.

According to an embodiment, an edge arc of the first basic fixed substrate portion may have a greater length than an edge arc of the first extended fixed substrate portion, and an edge arc of the second basic fixed substrate portion may have a greater length than an edge arc of the second extended fixed substrate portion.

According to an embodiment, the first fixed substrate part may include a plurality of first basic fixed substrate portions having a surface with a first size and a plurality of first extended fixed substrate portions that extend from the plurality of first basic fixed substrate portions and have a surface with a second size greater than the first size and that are disposed between the plurality of first basic fixed substrate portions. The second fixed substrate part may include a plurality of second basic fixed substrate portions having a surface with the first size and a plurality of second extended fixed substrate portions that extend from the plurality of second basic fixed substrate portions and have a surface with the second size greater than the first size and that are disposed between the plurality of second basic fixed substrate portions.

According to an embodiment, the shaft fixing part may include a shaft body, a first shaft fixing part that extends from the shaft body in a first direction and includes a third protruding pattern formed in a direction toward the first elastic member, and a second shaft fixing part that extends from the shaft body in a second direction and includes a fourth protruding pattern formed in a direction toward the second elastic member. The at least one hinge structure may further include a third friction plate (referred to as a first shaft friction plate) (or, a friction plate formed to be the same as or similar to the first friction plate) disposed between the first shaft fixing part and the first elastic member and a fourth friction plate (referred to as a second shaft friction plate) (or, a friction plate formed to be the same as or similar to the second friction plate) disposed between the second shaft fixing part and the second elastic member. A size of a contact surface of the third friction plate brought into contact with the third protruding pattern may vary as the third friction plate rotates depending on the rotation of the first shaft and a size of a contact surface of the fourth friction plate brought into contact with the fourth protruding pattern may vary as the fourth friction plate rotates depending on the rotation of the second shaft.

According to an embodiment, the third protruding pattern may include a plurality of third crest portions that further protrude beyond peripheral portions and a plurality of third support portions formed lower than the plurality of third crest portions and formed between the plurality of third crest portions to form the peripheral portions. The fourth protruding pattern may include a plurality of fourth crest portions that further protrude beyond peripheral portions and a plurality of fourth support portions formed lower than the plurality of fourth crest portions and formed between the plurality of fourth crest portions to form the peripheral portions.

According to an embodiment, the third friction plate may include a plurality of third basic substrate portions (referred to as first basic shaft substrate portions) (e.g., having a shape the same as or similar to the first basic substrate portions) that have a surface with a first size and a plurality of third extended substrate portions (referred to as first extended shaft substrate portions) (e.g., having a shape the same as or similar to the first extended substrate portions) that extend from the plurality of third basic substrate portions and have a surface with a second size greater than the first size and that are disposed between the plurality of third basic substrate portions. The fourth friction plate may include a plurality of fourth basic substrate portions (referred to as second basic shaft substrate portions) (e.g., having a shape the same as or similar to the second basic substrate portions) that have a surface with the first size and a plurality of fourth extended substrate portions (referred to as second extended shaft substrate portions) (e.g., having a shape the same as or similar to the second extended substrate portions) that extend from the plurality of fourth basic substrate portions and have a surface with the second size greater than the first size and that are disposed between the fourth basic substrate portions.

According to an embodiment, the foldable electronic device may further include a third washer ring disposed between the third friction plate and the first elastic member and a fourth washer ring disposed between the fourth friction plate and the second elastic member.

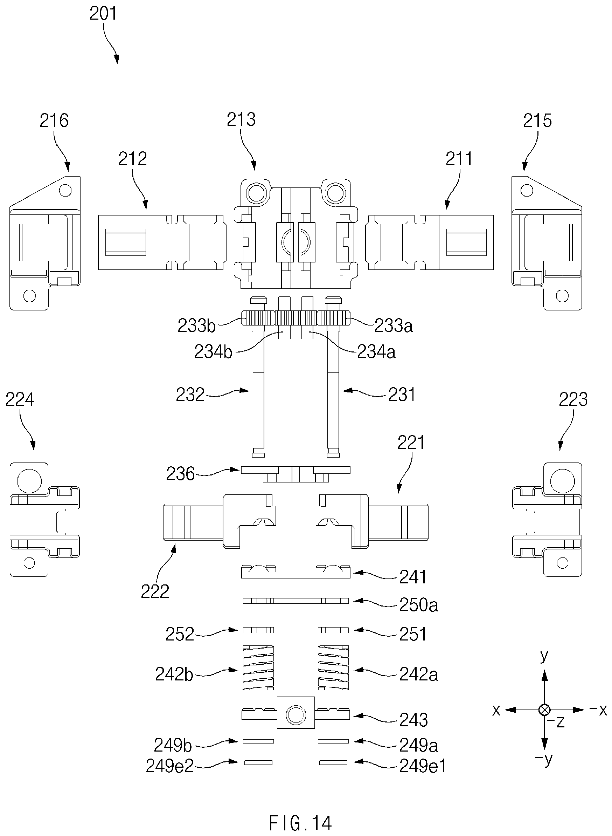

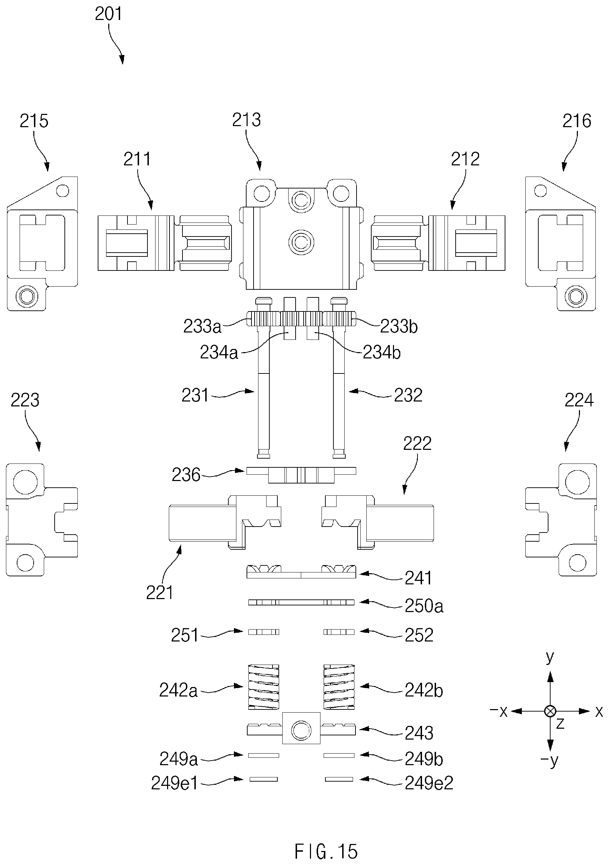

FIG. 13 is an exploded perspective view of a second type hinge structure according to an embodiment. FIG. 14 is a top view illustrating an exploded state of the second type hinge structure according to an embodiment. FIG. 15 is a bottom view illustrating the exploded state of the second type hinge structure according to an embodiment.

Referring to FIG. 1 to 15, the second type hinge structure 201 may include a fixed bracket 213 including a lower fixed bracket 213a (e.g., including a first rail 213a1 and a second rail 213a2) and an upper fixed bracket 213b, a first rotation member 211 (or, a first rotation structure, a first rotation part, or a first rotation body) (e.g., a member including a first rotation body 211_3, a first rail structure 211_1, and a second rail structure 211_2) that rotates about a first axis 11 (e.g., a first virtual axis in the y-axis direction that is different from a first shaft 231), a second rotation member 212 (or, a second rotation structure, a second rotation part, or a second rotation body) (e.g., a member including a second rotation body 212_3, a third rail structure 212_1, and a fourth rail structure 212_2) that rotates about a second axis 12 (or, a second virtual axis different from a second shaft 232 and formed parallel to the first axis 11), a first arm member 221 (or, a first arm part or a first arm structure) (e.g., including a first arm body 221_3, a first arm part 221_1, and a second arm part 221_2) that rotates about the first shaft 231 (or, a first central axis of the first shaft), a second arm member 222 (or, a second arm part or a second arm structure) (e.g., including a second arm body 222_3, a third arm part 222_1, and a fourth arm part 222_2) that rotates about the second shaft 232 (or, a second central axis of the second shaft), a first link member 215 (e.g., including a first link body 215_3, an eleventh link sidewall 215_1, a twelfth link sidewall 215_2, and a first link connecting part 215_4) that fixes the first rotation member 211 to the first housing 110 and supports a rotation operation (or, a sliding operation) of the first rotation member 211, a second link member 216 (e.g., including a second link body 216_3, a 21^{st} link sidewall 216_1, a 22^{nd} link sidewall 216_2, and a second link connecting part 216_4) that fixes the second rotation member 212 to the second housing 120 and supports a rotation operation (or, a sliding operation) of the second rotation member 212, a third link member 223 (e.g., including a third link body 223_3, a 31^{st} link sidewall 223_1, a 32^{nd} link sidewall 223_2, and a third link connecting part 223_4) that fixes the first arm member 221 to the first housing 110 and supports a rotation operation (or, a sliding operation) of the first arm member 221, and a fourth link member 224 (e.g., including a fourth link body 224_3, a 41^{st} link sidewall 224_1, a 42^{nd} link sidewall 224_2, and a fourth link connecting part 224_4) that fixes the second arm member 222 to the second housing 120 and supports a rotation operation (or, a sliding operation) of the second arm member 222.

Additionally or alternatively, the second type hinge structure 201 may include a first main gear 233a formed (or, disposed) on the first shaft 231, a second main gear 233b formed (or, disposed) on the second shaft 232, one or more idle gears 234a and 234b disposed between the first main gear 233a and the second main gear 233b, a stopper 236 that fixes the first main gear 233a, the second main gear 233b, and the one or more idle gears 234a and 234b and prevents the first arm member 221 and the second arm member 222 from rotating through a specified angle or more, a shaft fixing part 243 used to fix the first shaft 231 and the second shaft 232, a cam member 241 cam-coupled with cam structures formed on the first arm member 221 and the second arm member 222, a first elastic member 242a (or, an elastic body) and a second elastic member 242b that provide elastic forces to the cam member 241, a plurality of coupling members 249e1 and 249e2, and washer rings 249a and 249b.

The components of the second type hinge structure 201 described above may correspond to the components of the first type hinge structure (or, the first hinge structure 200a) described above with reference to FIGS. 1 to 6, except for a structure related to friction plates. Accordingly, specific descriptions of the remaining components other than the structure related to the friction plates (e.g., a fixed friction plate 250a and friction plates 251 and 252 (or, rotation friction plates, rotation substrates, or a third friction plate and a fourth friction plate)) will be replaced with the contents described above with reference to FIGS. 1 to 6. The second type hinge structure 201 may include the cam member 241 including cam parts formed only in the y-axis direction unlike the cam member of the first type hinge structure. The cam member 241 of the second type hinge structure 201 may be engaged with cam structures of the arm members 221 and 222 to perform a cam operation.

The second type hinge structure 201 may include the fixed friction plate 250a and the friction plates 251 and 252 that are disposed between the cam member 241 and the shaft fixing part 243. For example, the fixed friction plate 250a may be disposed between the friction plates 251 and 252 and the cam member 241. The first friction plate 251 (or, the first rotation friction plate, the first friction plate of the second type hinge structure 201, or the third friction plate) may be disposed between the first elastic member 242a and one side of the fixed friction plate 250a, and the second friction plate 252 (or, the second rotation friction plate, the second rotation substrate, the second friction plate of the second type hinge structure 201, or the fourth friction plate) may be disposed between the second elastic member 242b and an opposite side of the fixed friction plate 250a.

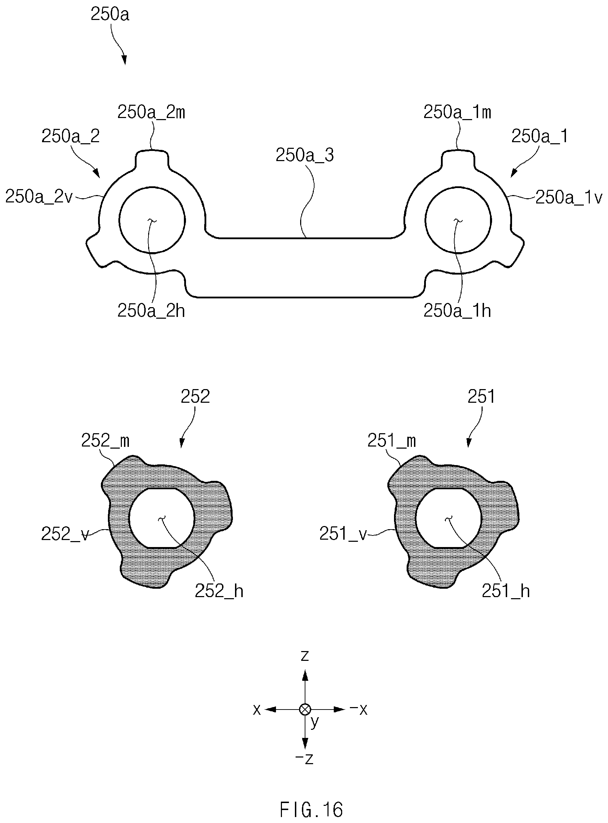

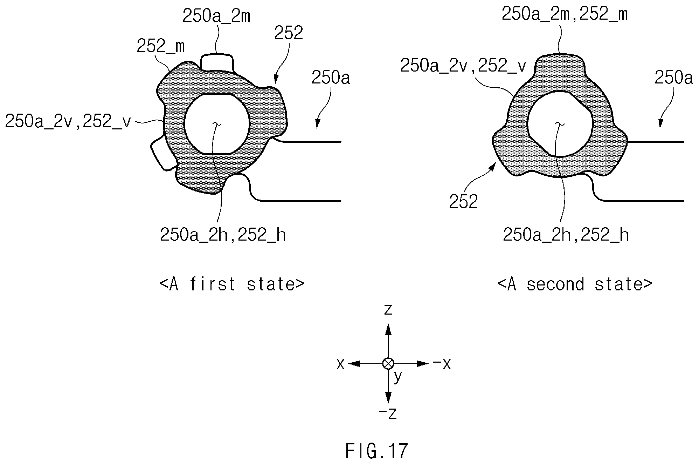

FIG. 16 is a view illustrating some components of the second type hinge structure related to a change in frictional force according to an embodiment, and FIG. 17 is a view illustrating a change in contact states of the some components of the second type hinge structure related to the change in frictional force according to an embodiment.

Referring to FIGS. 13 to 16, the fixed friction plate 250a may include a substrate body 250a_3, a first fixed substrate part 250a_1, and a second fixed substrate part 250a_2.

The substrate body 250a_3 may be formed such that the width in the x-axis direction is greater than the width in the z-axis direction. At least a portion of the substrate body 250a_3 may face one surface of the cam member 241 that faces in the - y-axis direction. The substrate body 250a_3 may have a flat shape as a whole. The first fixed substrate part 250a_1 and the second fixed substrate part 250a_2 may be disposed at opposite edges of the substrate body 250a_3. The first fixed substrate part 250a_1 and the second fixed substrate part 250a_2 may be disposed to be symmetrical to each other with respect to the center of the substrate body 250a_3. Surfaces of the substrate body 250a_3, the first fixed substrate part 250a_1, and the second fixed substrate part 250a_2 that face in the -y-axis direction may be formed side by side (or, disposed on the same plane). Alternatively, the substrate body 250a_3 may have the same thickness as the first fixed substrate part 250a_1 and the second fixed substrate part 250a_2 in the -y-axis direction.

One side of the first fixed substrate part 250a_1 may be connected to the substrate body 250_3. For example, the first fixed substrate part 250a_1 may extend from the center of the substrate body 250a_3 in the -x-axis direction, may be disposed at the edge of the substrate body 250a_3 that faces in the -x-axis direction, and may protrude from the substrate body 250a_3 in the z-axis direction. For example, at least a portion of the first fixed substrate part 250a_1 may further protrude in the z-axis direction by a certain distance beyond the bottom surface (or, the upper surface or a surface in the -z-axis or z-axis direction) of the substrate body 250a_3. The certain distance may vary depending on the size of the applied hinge structure.

The first fixed substrate part 250a_1 may include a first fixed substrate hole 250a_1h through which the first shaft 231 passes, a first basic fixed substrate portion 250a_1v surrounding one side of the first fixed substrate hole 250a_1h and having a first thickness (or, a first width), and a first extended fixed substrate portion 250a_1m surrounding an opposite side of the first fixed substrate hole 250a_1h and having a second thickness (or, a second width). Unlike the z-axis section of the first shaft 231, a section (e.g., the z-axis section) of the first fixed substrate hole 250a_1h may have a circular shape.

A first distance from the center of the first fixed substrate hole 250a_1h to the outer edge of the first basic fixed substrate portion 250a_1v may be shorter than a second distance from the center of the first fixed substrate hole 250a_1h to the outer edge of the first extended fixed substrate portion 250a_1m. Accordingly, when observed from the center of the first fixed substrate hole 250a_1h, the edge of the first extended fixed substrate portion 250a_1m may further protrude outward beyond the edge of the first basic fixed substrate portion 250a_1v. Alternatively, when observed from the center of the first fixed substrate hole 250a_1h, the edge of the first basic fixed substrate portion 250a_1v may be closer to the center of the first fixed substrate hole 250a_1h than the edge of the first extended fixed substrate portion 250a_1m.

The first fixed substrate part 250a_1 may include a plurality of first basic fixed substrate portions 250a_1v and a plurality of first extended fixed substrate portions 250a_1m. For example, the first basic fixed substrate portions 250a_1v (or, the first extended fixed substrate portions 250a_1m) may be spaced apart from each other by a specified angle with respect to the center of the first fixed substrate hole 250a_1h. When the angles allocated to the respective substrate portions are compared with respect to the center of the first fixed substrate hole 250a_1h, the sizes of the arcs of the first basic fixed substrate portions 250a_1v and the sizes of the arcs of the first extended fixed substrate portions 250a_1m may be set to be the same as each other, but may be different from each other in relation to adjustment of the magnitude of a frictional force. For example, with respect to the center of the first fixed substrate hole 250a_1h, the angles of the arcs allocated to the first basic fixed substrate portions 250a_1v may be greater than the angles of the arcs allocated to the first extended fixed substrate portions 250a_1m. Alternatively, with respect to the center of the first fixed substrate hole 250a_1h, the lengths of the arcs of the first basic fixed substrate portions 250a_1v may be greater than the lengths of the arcs of the first extended fixed substrate portions 250a_1m. When observed outward from the center of the first fixed substrate hole 250a_1h, the widths of the first basic fixed substrate portions 250a_1v may be smaller than the widths of the first extended fixed substrate portions 250a_1m.

One side of the second fixed substrate part 250a_2 may be connected to the substrate body 250_3. For example, the second fixed substrate part 250a_2 may extend from the center of the substrate body 250a_3 in the x-axis direction, may be disposed at the edge of the substrate body 250a_3 that faces in the x-axis direction, and may protrude from the substrate body 250a_3 in the z-axis direction. For example, at least a portion of the second fixed substrate part 250a_2 may further protrude in the z-axis direction by a certain distance beyond the bottom surface (or, the upper surface or a surface in the - z-axis or z-axis direction) of the substrate body 250a_3. The size by which the second fixed substrate part 250a_2 protrudes in the z-axis direction from the substrate body 250a_3 may be the same as the size by which the first fixed substrate part 250a_1 protrudes in the z-axis direction from the substrate body 250a_3.

The second fixed substrate part 250a_2 may include a second fixed substrate hole 250a_2h through which the second shaft 232 passes, a second basic fixed substrate portion 250a_2v surrounding one side of the second fixed substrate hole 250a_2h and having the first thickness, and a second extended fixed substrate portion 250a_2m surrounding an opposite side of the second fixed substrate hole 250a_2h and having the second thickness. Similarly or identically to the first fixed substrate hole 250a_1h, a section (e.g., the z-axis section) of the second fixed substrate hole 250a_2h may have a circular shape unlike the z-axis section of the second shaft 232.

When observed from the center of the second fixed substrate hole 250a_2h, the first distance from the center of the second fixed substrate hole 250a_2h to the outer edge of the second basic fixed substrate portion 250a_2v may be shorter than the second distance from the center of the second fixed substrate hole 250a_2h to the outer edge of the second extended fixed substrate portion 250a_2m. The second basic fixed substrate portion 250a_2v may have a shape that is the same as or similar to the shape of the first basic fixed substrate portion 250a_1v and may be symmetrical to the first basic fixed substrate portion 250a_1v with respect to the z-axis crossing the center of the substrate body 250a_3. The second fixed substrate part 250a_2 may include a plurality of second basic fixed substrate portions 250a_2v and a plurality of second extended fixed substrate portions 250a_2m that alternate with each other. The second basic fixed substrate portions 250a_2v may have a structure that is the same as or similar to that of the first basic fixed substrate portions 250a_1v of the first fixed substrate part 250a_1 described above, and the second extended fixed substrate portions 250a_2m may have a structure that is the same as or similar to that of the first extended fixed substrate portions 250a_1m of the first fixed substrate part 250a_1 described above.

The first friction plate 251 may have a structure that is the same as or similar to the structure of the first friction plate 251 described above with reference to FIG. 5. For example, the first friction plate 251 may be mounted on the first shaft 231 and may be disposed to make contact with the first fixed substrate part 250a_1 of the fixed friction plate 250a. The elastic force of the first elastic member 242a may be applied to the first friction plate 251. Correspondingly, while the first shaft 231 rotates, the first friction plate 251 may remain in contact with the first fixed substrate part 250a_1. Structurally, the first friction plate 251 may be disposed between the first fixed substrate part 250a_1 and the first elastic member 242a. Additionally, a washer ring may be disposed between the first friction plate 251 and the first elastic member 242a. The first friction plate 251 may include, in the center thereof, a first substrate hole 251_h (or, a first rotation substrate hole that is the same as the first substrate hole 251_h described above) through which the first shaft 231 passes and may have a ring shape surrounding the first substrate hole 251_h. The first substrate hole 251_h may have a shape similar to the shape of the z-axis section of the first shaft 231. For example, the z-axis section of the first substrate hole 251_h may have a shape in which upper and lower surfaces are flat and side surfaces are curved. Accordingly, when the first shaft 231 is rotated by the first arm member 221 after inserted through the first substrate hole 251_h, the first friction plate 251 having the first substrate hole 25 1_h may rotate in the same direction as the direction in which the first arm member 221 rotates.

The first friction plate 251 may generate friction while at least partially making contact with the first fixed substrate part 250a_1 in response to the elastic force provided by the first elastic member 242a. The frictional force between the first friction plate 251 and the first fixed substrate part 250a_1 may be used to maintain the foldable electronic device 100 at a specific angle or prevent the foldable electronic device 100 from being easily opened in the folded state. In this regard, the first friction plate 251 may include first basic substrate portions 251_v (or, components the same as the above-described first basic substrate portions) formed to the first distance from the center of the first substrate hole 251_h and first extended substrate portions 251_m (or, components the same as the above-described first extended substrate portions 25 1_m, first extended rotation substrate portions) formed to the second distance longer than the first distance from the center of the first substrate hole 251_h so as to protrude. The first basic substrate portions 251_v (or, the first basic rotation substrate portions) and the first extended substrate portions 251_m may have a structure and a material that are the same as or similar to the structure and the material of the first basic substrate portions 251_v and the first extended substrate portions 25 1_m described above with reference to FIG. 5.

The second friction plate 252 may have a structure and a size that are the same as or similar to the structure and the size of the first friction plate 251. For example, the second friction plate 252 may include a second substrate hole 252_h (or, a second rotation substrate hole the same as the above-described second substrate hole 252_h), second basic substrate portions 252_v (or, second basic rotation substrate portions the same as the above-described second basic substrate portions 252_v), and second extended substrate portions 252_m (or, second extended rotation substrate portions the same as the above-described second extended substrate portions 252_m). At least one of the shapes, the structures, the sizes, or the arrangement forms of the above-described components may correspond to those of the first substrate hole 251_h, the first basic substrate portions 251_v, and the first extended substrate portions 25 1_m described above.

The lengths of the arcs of the first extended substrate portions 251_m (or, the second extended substrate portions 252_m) may be different from the lengths of the arcs of the first extended fixed substrate portions 250a_1m (or, the second extended fixed substrate portions 250a_2m). For example, the lengths of the arcs of the first extended substrate portions 251_m (or, the second extended substrate portions 252_m) may be greater than the lengths of the arcs of the first extended fixed substrate portions 250a_1m (or, the second extended fixed substrate portions 250a_2m). According to an embodiment, the lengths of the arcs of the first extended substrate portions 251_m (or, the second extended substrate portions 252_m) may be smaller than the lengths of the arcs of the first extended fixed substrate portions 250a_1m (or, the second extended fixed substrate portions 250a_2m). Similarly, the lengths of the arcs of the first basic substrate portions 251_v (or, the second basic substrate portions 252_v) may be different from the lengths of the arcs of the first basic fixed substrate portions 250a_1v (or, the second basic fixed substrate portions 250a_2v). For example, the lengths of the arcs of the first basic substrate portions 251_v (or, the second basic substrate portions 252_v) may be greater than the lengths of the arcs of the first basic fixed substrate portions 250a_1v (or, the second basic fixed substrate portions 250a_2v). According to an embodiment, the lengths of the arcs of the first basic substrate portions 251_v (or, the second basic substrate portions 252_v) may be smaller than the lengths of the arcs of the first basic fixed substrate portions 250a_1v (or, the second basic fixed substrate portions 250a_2v).

Referring to FIGS. 13 to 17, the second shaft 232 may be disposed to pass through the second fixed substrate hole 250a_2h formed in the second fixed substrate part 250a_2 of the fixed friction plate 250a and the second substrate hole 252_h formed in the second friction plate 252. The second elastic member 242b may be coupled to the second shaft 232 and may press the second friction plate 252 in the y-axis direction. Correspondingly, as illustrated, one surface of the second fixed substrate part 250a_2 in the -y-axis direction may make contact with one surface of the second friction plate 252 in the y-axis direction.

According to an embodiment, the foldable electronic device 100 may have a first state that supports a detent mode. Alternatively, the first state may include a situation in which the foldable electronic device 100 is in a closed state (or, a folded state) or an open state (or, an unfolded state), a situation in which the foldable electronic device 100 is opened by a specified angle in the closed state, or a situation in which the display 160 is unfolded from a specified angle (e.g., an angle of 120 degrees or more) to 180 degrees. In the first state, as illustrated, the contact state of the second fixed substrate part 250a_2 and the second friction plate 252 may include a state in which the second extended fixed substrate portions 250a_2m and the second extended substrate portions 252_m are staggered with respect to each other. Alternatively, in the first state, the contact state of the second fixed substrate part 250a_2 and the second friction plate 252 may include a state in which the second basic fixed substrate portions 250a_2v and the second basic substrate portions 252_v partially overlap each other. In another case, in the first state, the second extended fixed substrate portions 250_2m may make contact with parts of the second extended substrate portions 252_m and parts of the second basic substrate portions 252_v, and the second basic fixed substrate portions 250a_2v may make contact with the remaining parts of the second extended substrate portions 252_m and the remaining parts of the second basic substrate portions 252_v.

According to an embodiment, the foldable electronic device 100 may have a second state that supports a flex mode. The second state may include at least one time point of a state in which the foldable electronic device 100 remains mounted in a specified angle range (e.g., a range of 60 degrees to 120 degrees). In the second state, as illustrated, the contact state of the second fixed substrate part 250a_2 and the second friction plate 252 may include a state in which the second extended fixed substrate portions 250a_2m and the second extended substrate portions 252_m overlap each other when observed in the y-axis direction. Alternatively, in the second state, the contact state of the second fixed substrate part 250a_2 and the second friction plate 252 may include a state in which the second basic fixed substrate portions 250a_2v and the second basic substrate portions 252_v overlap each other.

Meanwhile, although the contact state of the second fixed substrate part 250a_2 and the second friction plate 252 has been described above, the first fixed substrate part 250a_1 and the first friction plate 251 may also have the same contact state in the first state and the second state.

As described above, in the first state, the second extended fixed substrate portions 250a_2m may be partially brought into contact with the second extended substrate portions 252_m and the second basic substrate portions 252_v with the size of a first contact surface, and in the second state, the second extended fixed substrate portions 250a_2m may be brought into contact with the second extended substrate portions 252_m with the size of a second contact surface (e.g., a size larger than the size of the first contact surface). Similarly, in the first state, the first extended fixed substrate portions 250a_1m may be partially brought into contact with the first extended substrate portions 25 1_m and the first basic substrate portions 25 1_v with the size of the first contact surface, and in the second state, the first extended fixed substrate portions 250a_1m may be brought into contact with the first extended substrate portions 25 1_m with the size of the second contact surface (e.g., a size larger than the size of the first contact surface). Since the second contact surface in the second state is larger than the first contact surface in the first state, a second frictional force generated in the second state may be greater than a first frictional force generated in the first state, and thus the foldable electronic device 100 may maintain a stable mounting state based on the second frictional force during the flex mode.

As described above, according to an embodiment of the invention, a foldable electronic device may include a display 160, a first housing 110 and a second housing 120, in each of which at least a portion of the display is accommodated, one or more hinge structures 200a and 200b connecting the first housing and the second housing, and a hinge housing on which the one or more hinge structures are seated. The one or more hinge structures may include a fixed bracket 213 that is seated on the hinge housing and that includes a first rail 213a1 and a second rail 213a2, a first rotation member 211 including a first rail structure 211_1 inserted into the first rail and a second rail structure 211_2 extending from the first rail structure, a second rotation member 212 including a third rail structure 212_1 inserted into the second rail and a fourth rail structure 212_2 extending from the third rail structure, a first link member 215 fixed to the first housing and coupled with the first rail structure, a second link member 216 fixed to the second housing and coupled with the third rail structure, a third link member 223 fixed to the first housing and disposed adjacent to the first link member, a fourth link member 224 fixed to the second housing and disposed adjacent to the second link member, a first arm member 221 that is coupled to the third link member and that includes a first cam structure, a second arm member 222 that is coupled to the fourth link member and that includes a second cam structure, a first shaft 231 fastened to the first arm member 221, a second shaft 232 fastened to the second arm member 222, a shaft fixing part 243 that fixes the first shaft and the second shaft, a first elastic member 242a disposed between the first shaft 231 and the shaft fixing part 243, a second elastic member 242b disposed between the second shaft 232 and the shaft fixing part 243, a cam member 241 including a first cam part fastened with the first cam structure of the first arm member 221 and a second cam part fastened with the second cam structure of the second arm member 222, a first friction plate 251 that is disposed between the first elastic member and the cam member and that rotates depending on rotation of the first shaft, a second friction plate 252 that is disposed between the second elastic member and the cam member and that rotates depending on rotation of the second shaft, and a fixed friction plate 250a disposed between the friction plates 251 and 252 and the cam member. Here, the fixed friction plate 250a may be disposed between the elastic members 242a and 242b and the friction plates 251 and 252.

Meanwhile, although the foldable electronic device has been described as including the link members 215, 216, 223, and 224, the invention is not limited thereto, and a structure in which the link members 215, 216, 223, and 224 are omitted and the first rotation member 211, the second rotation member 212, the first arm member 221, and the second arm member 222 are directly coupled to the first housing 110 and the second housing 120 may be employed.

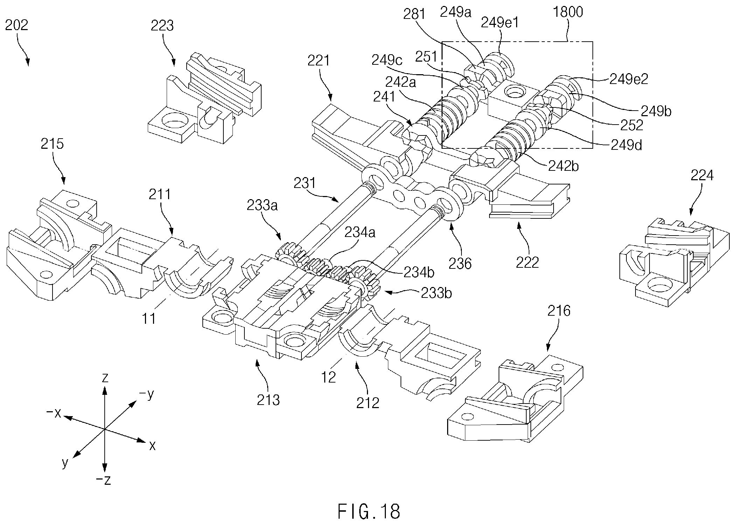

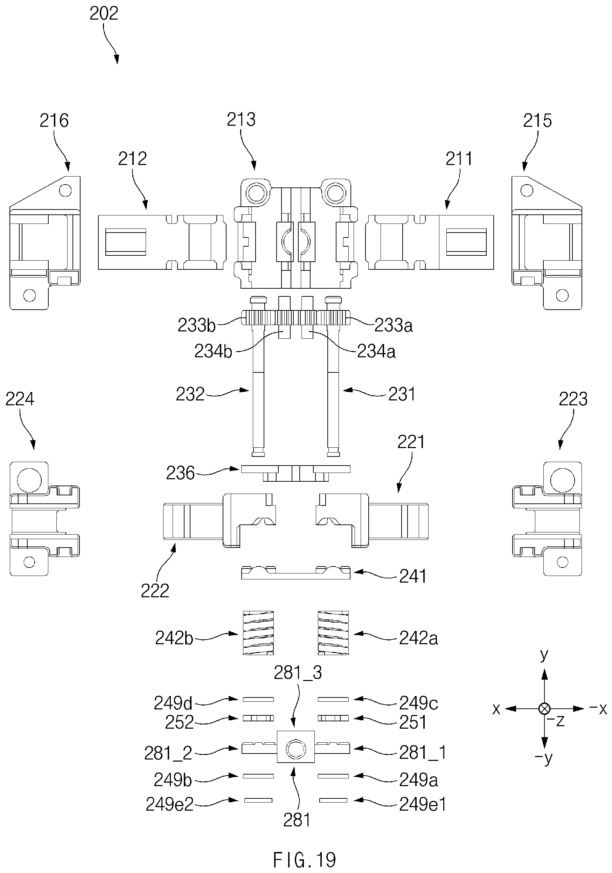

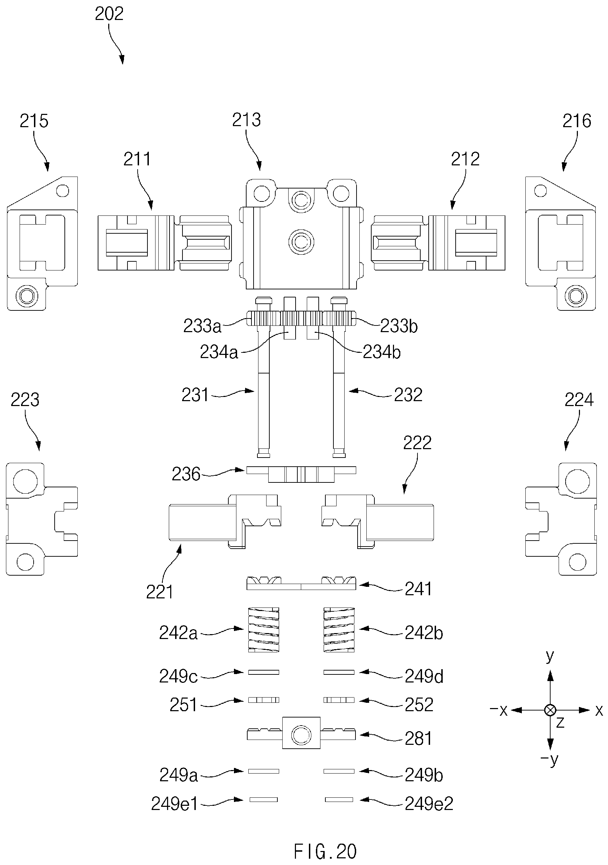

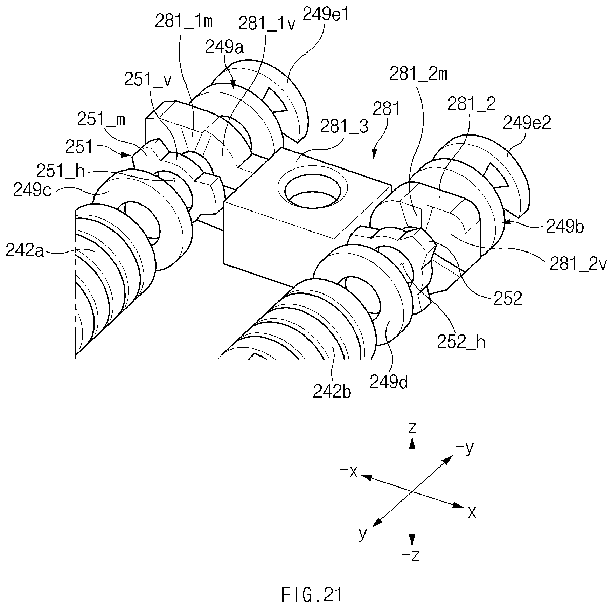

FIG. 18 is an exploded perspective view of a third type hinge structure according to an embodiment. FIG. 19 is a top view illustrating an exploded state of the third type hinge structure according to an embodiment. FIG. 20 is a bottom view illustrating the exploded state of the third type hinge structure according to an embodiment. FIG. 21 is a view illustrating some components of the third type hinge structure related to a change in frictional force according to an embodiment. Here, FIG. 21 may be a view illustrating a partial region 1800 of FIG. 18 showing the some components related to the change in frictional force.

Referring to FIGS. 1 to 20, the third type hinge structure 202 may include a fixed bracket 213, a first rotation member 211 (or, a first rotation structure, a first rotation part, or a first rotation body) that rotates about a first axis 11 (e.g., a first virtual axis in the y-axis direction that is different from a first shaft 231), a second rotation member 212 (or, a second rotation structure, a second rotation part, or a second rotation body) that rotates about a second axis 12 (e.g., a second virtual axis different from a second shaft 232 and formed parallel to the first axis 11), a first arm member 221 (or, a first arm part or a first arm structure) that rotates about the first shaft 231 (or, a first central axis of the first shaft), a second arm member 222 (or, a second arm part or a second arm structure) that rotates about the second shaft 232 (or, a second central axis of the second shaft), a first link member 215 that fixes the first rotation member 211 to the first housing 110 and supports a rotation operation (or, a sliding operation) of the first rotation member 211, a second link member 216 that fixes the second rotation member 212 to the second housing 120 and supports a rotation operation (or, a sliding operation) of the second rotation member 212, a third link member 223 that fixes the first arm member 221 to the first housing 110 and supports a rotation operation (or, a sliding operation) of the first arm member 221, and a fourth link member 224 that fixes the second arm member 222 to the second housing 120 and supports a rotation operation (or, a sliding operation) of the second arm member 222.

Additionally or alternatively, the third type hinge structure 202 may include a first main gear 233a formed (or, disposed) on the first shaft 231, a second main gear 233b formed (or, disposed) on the second shaft 232, one or more idle gears 234a and 234b disposed between the first main gear 233a and the second main gear 233b, a stopper 236 that fixes the first main gear 233a, the second main gear 233b, and the one or more idle gears 234a and 234b and prevents the first arm member 221 and the second arm member 222 from rotating through a specified angle or more, a modified shaft fixing part 281 (or, a shaft fixing part or a fixing part) used to fix the first shaft 231 and the second shaft 232, a cam member 241 cam-coupled with cam structures formed on the first arm member 221 and the second arm member 222, a first elastic member 242a (or, an elastic body) and a second elastic member 242b that provide elastic forces to the cam member 241, a plurality of coupling members 249e1 and 249e2, and washer rings 249a, 249b, 249c, and 249d.

The components of the third type hinge structure 202 described above may correspond to at least some of the components of the first type hinge structure (or, the first hinge structure 200a) described above with reference to FIGS. 1 to 6 or the second type hinge structure 201 described above with reference to FIGS. 13 to 15, except for a structure related to friction plates. Accordingly, specific descriptions of the remaining components other than the structure related to the friction plates (e.g., friction plates 251 and 252 (or, shaft friction plates)) will be replaced with the contents described above with reference to FIGS. 1 to 6 or the contents described above with reference to FIGS. 13 to 15. The third type hinge structure 202 may include the cam member 241 that is the same as or similar to the cam member of the second type hinge structure 201, and the cam member 241 may be engaged with the cam structures of the arm members 221 and 222 and may perform a cam operation.

Referring to FIGS. 1 to 21, in relation to generating a frictional force, the third type hinge structure 202 may include at least the modified shaft fixing part 281 and the friction plates 251 and 252 (or, the fifth friction plate and the sixth friction plate) disposed to make contact with the modified shaft fixing part 281. Alternatively, in relation to generating a frictional force, the third type hinge structure 202 may include the first shaft 231, the first elastic member 242a, the modified shaft fixing part 281, the first friction plate 251 (or, the first shaft friction plate, the first shaft substrate, the first friction plate of the third type hinge structure 202, or the fifth friction plate), the second shaft 232, the second elastic member 242b, and the second friction plate 252 (or, the second shaft friction plate, the second shaft substrate, the second friction plate of the third type hinge structure 202, or the sixth friction plate) and may additionally include the first to fourth washer rings 249a, 249b, 249c, and 249d and the first and second coupling members 249e1 and 249e2. In the above-described configuration, at least some of the first to fourth washer rings 249a, 249b, 249c, and 249d and the first and second coupling members 249e1 and 249e2 may be omitted.

The modified shaft fixing part 281 may include a shaft body 281_3, a first shaft fixing part 281_1 disposed on one side of the shaft body 281_3 (e.g., in the -x-axis direction), and a second shaft fixing part 281_2 disposed on an opposite side of the shaft body 281_3 (e.g., in the x-axis direction). The shaft body 243_3 may include a through-hole that penetrates the shaft body 281_3 in the up-down direction (e.g., in the -z-axis direction from one point on the z-axis) and that is used to fix the modified shaft fixing part 281 to the hinge housing 150.

In an embodiment, the shaft fixing part 243 of the hinge structure (200a) or (200b) according to the present invention may include a shaft body 281_3, a first shaft fixing part 281_1 configured to extend from the shaft body 281_3 in a first direction, the first shaft fixing part 281_1 may include a third protruding pattern 281_1m or 281_1v formed in a direction toward the first elastic member 242a; and a second shaft fixing part 281_2 configured to extend from the shaft body 281_3 in a second direction, the second shaft fixing part 281_2 may include a fourth protruding pattern formed in a direction toward the second elastic member 242b. At least one hinge structure 201 may further include a first shaft friction plate disposed between the first shaft fixing part 281_1 and the first elastic member 242a, wherein a size of a contact surface of the first shaft friction plate brought into contact with the third protruding pattern 281_1m or 281_1v may vary as the first shaft friction plate rotates depending on the rotation of the first shaft 231; and a second shaft friction plate disposed between the second shaft fixing part 281_2 and the second elastic member 242b, wherein a size of a contact surface of the second shaft friction plate brought into contact with the fourth protruding pattern may vary as the second shaft friction plate rotates depending on the rotation of the second shaft 232.

According to an embodiment, the hinge structure (200a) or (200b) according to the present invention further comprise a first washer ring (249c) disposed between the first shaft friction plate and the first elastic member (242a); and a second washer ring (249d) disposed between the second shaft friction plate and the second elastic member (242b).

The first shaft fixing part 281_1 may include a first shaft hole that penetrates the first shaft fixing part 281_1 in the direction from the y-axis to the -y-axis and through which the first shaft 231 is inserted. Unlike the z-axis section of the first shaft 231, the first shaft hole may have a cylindrical shape. The first shaft fixing part 281_1 may support one side of the first elastic member 242a. A third protruding pattern 281_1m and 281_1v may be formed on one surface of the first shaft fixing part 281_1 that faces in the y-axis direction. The third protruding pattern 281_1m and 281_1v may be formed to be the same as or similar to the first protruding pattern 241_1 of the cam member 241 described above with reference to FIG. 5. For example, the size of the one surface of the first shaft fixing part 281_1 that faces in the y-axis direction may be the same as or similar to the size of one surface of the first friction plate 251 that faces in the -y-axis direction (or, may be larger than the size of the first friction plate 251). The third protruding pattern 281_1m and 281_1v may include at least one or a plurality of third crest portions 281_1m that further protrude in the y-axis direction beyond the surroundings and that have flat top portions and at least one or a plurality of third support portions 281_1v that are formed lower than the third crest portions 281_1m and that support the at least one or plurality of third crest portions 281_1m, and at least parts of the third support portions 281_1v that face in the y-axis direction may be formed flat. The third crest portions 281_1m and the third support portions 281_1v may alternate with each other along the portion around the first shaft hole. Accordingly, the plurality of third crest portions 281_1m may be spaced apart from each other by the third support portions 281_1v disposed therebetween. The third crest portions 281_1m may have a shape (e.g., a fan shape) in which the area of a top portion (e.g., a surface facing in the y-axis direction) is gradually increased toward the outside from the center of the hole through which the first shaft 231 is inserted. The third crest portions 281_1m may rise (or protrude) from the third support portions 281_1v in the -y-axis direction, and the boundaries between the third support portions 281_1v and the third crest portions 281_1m may be rounded. According to an embodiment, the sizes of surfaces of the third crest portions 281_1m that face in the y-axis direction may be different from (e.g., smaller than) the sizes of surfaces of the third support portions 281_1v that face in the y-axis direction.

The second shaft fixing part 281_2 may include a second shaft hole that is formed through the second shaft fixing part 281_2 in the direction from the y-axis to the -y-axis and disposed parallel to the first shaft hole and through which the second shaft 232 is inserted. Unlike the z-axis section of the second shaft 232, the second shaft hole may have a cylindrical shape. The second shaft fixing part 281_2 may support one side of the second elastic member 242b. The size of one surface of the second shaft fixing part 281_2 that faces in the y-axis direction may be the same as or similar to the size of the second friction plate 252. The above-described second shaft fixing part 281_2 may include at least one or a plurality of fourth crest portions 281_2m and at least one or a plurality of fourth support portions 281_2v that alternate with each other along the portion around the hole through which the second shaft 232 is inserted. The fourth crest portions 281_2m and the fourth support portions 281_2v may be formed to be the same as or similar to the third crest portions 281_1m and the third support portions 281_1v described above.

The first friction plate 251 may have a structure that is the same as or similar to the structure of the first friction plate 251 described above with reference to FIG. 5 or the structure of the first friction plate 251 described above with reference to FIG. 16. For example, the first friction plate 251 may include a first substrate hole 251_h (or, a first shaft substrate hole), first extended substrate portions 251_m (or, first extended shaft substrate portions), and first basic substrate portions 251_v (or, first basic shaft substrate portions). The first extended substrate portions 25 1_m may be the same as or similar to the first extended substrate portions described above with reference to FIG. 16, and the first basic substrate portions 251_v may be the same as or similar to the first basic substrate portions described above with reference to FIG. 16.

In addition, the second friction plate 252 may have a structure that is the same as or similar to the structure of the second friction plate 252 described above with reference to FIG. 5 or the structure of the second friction plate 252 described above with reference to FIG. 16. For example, the second friction plate 252 may include a second substrate hole 252_h (or, a second shaft substrate hole), second extended substrate portions 252_m (or, second extended shaft substrate portions), and second basic substrate portions 252_v (or, second basic shaft substrate portions). The second extended substrate portions 252_m may be the same as or similar to the second extended substrate portions described above with reference to FIG. 16, and the second basic substrate portions 252_v may be the same as or similar to the second basic substrate portions described above with reference to FIG. 16.

According to an embodiment, while the first friction plate 251 is in contact with the first shaft fixing part 281_1, the first shaft 231 may be inserted through the first friction plate 251 and the first shaft fixing part 281_1 and may rotate in one direction (e.g., the clockwise or counterclockwise direction) in response to rotation of the first arm member 221. The first friction plate 251 may rotate in response to the rotation of the first shaft 231, and the contact area between the third crest portions 281_1m of the first shaft fixing part 281_1 in the fixed state and the first friction plate 251 may vary depending on the rotation of the first shaft 231. Similarly, the second friction plate 252 may rotate in response to rotation of the second shaft 232, and the contact area between the fourth crest portions 281_2m of the second shaft fixing part 281_2 in the fixed state and the second friction plate 252 may vary depending on the rotation of the second shaft 232.

For example, while the foldable electronic device 100 is opened to a specified angle in a closed state or folded to a specified angle in an unfolded state, the first extended substrate portions 251_m of the first friction plate 251 may partially make contact with the third crest portions 281_1m of the first shaft fixing part 281_1, and the second extended substrate portions 252_m of the second friction plate 252 may partially make contact with the fourth crest portions 281_2m of the second shaft fixing part 281_2. Thus, a first contact area may be obtained. While the foldable electronic device 100 is in a flex mode (e.g., a mode in which the foldable electronic device 100 is mounted at a specified first angle while maintaining at least a specific angle in a second angle range), the first extended substrate portions 25 1_m of the first friction plate 251 may entirely overlap the third crest portions 281_1m of the first shaft fixing part 281_1 (the entire third crest portions 281_1m are temporarily located within the first extended substrate portions 25 1_m depending on a rotation state), and the second extended substrate portions 252_m of the second friction plate 252 may entirely make contact with the fourth crest portions 281_2m of the second shaft fixing part 281_2. Thus, a second contact area (or, a contact area larger than the first contact area) may be obtained. Accordingly, the foldable electronic device 100 may support a more stable flex mode and may provide a frictional force of a certain magnitude or less in the closed or open state.

As described above, according to an embodiment of the invention, a foldable electronic device may include a display 160, a first housing 110 and a second housing 120, in each of which at least a portion of the display is accommodated, one or more hinge structures 200a and 200b connecting the first housing and the second housing, and a hinge housing on which the one or more hinge structures are seated. The one or more hinge structures may include a fixed bracket 213 that is seated on the hinge housing and that includes a first rail 213a1 and a second rail 213a2, a first rotation member 211 including a rail structure 211_1 inserted into the first rail, a second rotation member 212 including a rail structure 212_1 inserted into the second rail, a first arm member 221 that rotates in response to rotation of the first rotation member and includes a first cam structure, a second arm member 222 that rotates in response to rotation of the second rotation member and includes a second cam structure, a first shaft 231 fastened to the first arm member 221, a second shaft 232 fastened to the second arm member 222, a modified shaft fixing part 281 that fixes the first shaft and the second shaft, a first elastic member 242a disposed between the first shaft 231 and the modified shaft fixing part 281, a second elastic member 242b disposed between the second shaft 232 and the modified shaft fixing part 281, a cam member 241 including a first cam part fastened with the first cam structure of the first arm member 221 and a second cam part fastened with the second cam structure of the second arm member 222, and friction plates 251 and 252 that are disposed between the elastic members and the modified shaft fixing part 281 and that rotate depending on rotation of the shafts.

Although the foldable electronic device has been described as not including the link members 215, 216, 223, and 223, the invention is not limited thereto, and at least some of the link members 215, 216, 223, and 223 may be added.

In the above description, in relation to the generation of the frictional force, various examples have been described through different drawings. However, at least some of the above-described examples may be cross-supported. For example, the foldable electronic device 100 may include a hinge structure employing at least one of a first friction plate structure, a second friction plate structure, or a third friction plate structure. The first friction plate structure may include the cam member 241 including the protruding patterns described with reference to FIGS. 3 to 5 and the friction plates 251 and 252 brought into contact with the cam member 241. The second friction plate structure may include the fixed friction plate 250a and the friction plates 251 and 252 described with reference to FIGS. 13 to 17. The third friction plate structure may include the modified shaft fixing part 281 including the protruding patterns described with reference to FIGS. 18 to 21 and the friction plates 251 and 252 brought into contact with the modified shaft fixing part 281. In addition, the foldable electronic device 100 may include a plurality of hinge structures, and each of the hinge structures may employ at least a part of the first to third friction plate structures described above. For example, a specific hinge structure may employ all of the first to third friction plate structures, may employ only the first and second friction plate structures, may employ only the first and third friction plate structures, or may employ only the second and third friction plate structures. Furthermore, friction plate structures employed in a plurality of hinge structures included in one foldable electronic device 100 may all be the same or may be different from one another. According to an embodiment, the first hinge structure 200a may further include the fixed friction plate 250a of the second type hinge structure 201 in addition to the structure that includes the cam member 241 including the protruding patterns 241_1 and 241_2, the first friction plate 251, and the second friction plate 252. For example, the fixed friction plate 250a may be disposed between the friction plates 251 and 252 and the washer rings (e.g., 249c and 249d). According to various embodiments, the third type hinge structure 202 may include the modified shaft fixing part 281 and the shaft friction plates 251 and 252, and additionally, the fixed friction plate 250a may be disposed to make contact with the shaft friction plates 251 and 252.

Although the friction plates mounted on the two shafts (e.g., the friction plates 251 and 252 included in the first hinge structure 200a, the fixed friction plate 250a and the friction plates 251 and 252 included in the second type hinge structure 201, and the friction plates 251 and 252 included in the third type hinge structure 202) have been illustrated and described above, embodiments of the invention are not limited thereto. For example, the hinge structures 200a and 200b or the first to third type hinge structures may include only one friction structure (e.g., a first friction structure generating friction forces having different magnitudes depending on rotation of the first shaft 231 or a second friction structure generating friction forces having different magnitudes depending on rotation of the second shaft 232).

According to an embodiment, the foldable electronic device according to the various embodiments disclosed in the invention may include a mobile communication electronic device and may be provided as a part of a computer program product related to operation of the mobile communication electronic device. The computer program product may be traded as a product between a seller and a buyer. The computer program product may be distributed in the form of a machine-readable storage medium (e.g., compact disc read only memory (CD-ROM)), or may be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A hinge structure (200a) or (200b) comprising:
a fixed bracket (213);
a first rotation member (211) and a second rotation member (212) coupled to the fixed bracket (213);
a first arm member (221) including a first cam structure, the first arm member (221) being configured to rotate in response to rotation of the first rotation member (211);
a second arm member (222) including a second cam structure, the second arm member (222) being configured to rotate in response to rotation of the second rotation member (212);
a first shaft (231) fastened to the first arm member (221);
a second shaft (232) fastened to the second arm member (222);
a shaft fixing part (243) configured to fix the first shaft (231) and the second shaft (232);
a first elastic member (242a) disposed between the first shaft (231) and the shaft fixing part (243);
a second elastic member (242b) disposed between the second shaft (232) and the shaft fixing part (243);
a cam member (241) including a first fixed cam part (241a) having, on one side thereof, a first cam part fastened with the first cam structure and a second fixed cam part (241b) having, on one side thereof, a second cam part fastened with the second cam structure;
a first friction plate (251) disposed between the first elastic member (242a) and the cam member (241) and configured to rotate depending on rotation of the first shaft (231); and
a second friction plate (252) disposed between the second elastic member (242b) and the cam member (241) and configured to rotate depending on rotation of the second shaft (232),
wherein the first fixed cam part (241a) includes a first protruding pattern (241_1) formed on an opposite side of the first fixed cam part (241a) and at least partially brought into contact with the first friction plate (251),
wherein the second fixed cam part (241b) includes a second protruding pattern (241_2) formed on an opposite side of the second fixed cam part (241b) and at least partially brought into contact with the second friction plate (252),
wherein a size of a contact surface of the first friction plate (251) brought into contact with the first protruding pattern (241_1) varies depending on rotation of the first friction plate (251), and
wherein a size of a contact surface of the second friction plate (252) brought into contact with the second protruding pattern (241_2) varies depending on rotation of the second friction plate (252).

2. A foldable electronic device (100) comprising:
a display (160);
a first housing (110) and a second housing (120) in each of which at least a portion of the display (160) is accommodated;
at least one hinge structure (200a) or (200b) according to claim 1 configured to connect the first housing (110) and the second housing (120); and
a hinge housing (150) on which the at least one hinge structure (200a, 200b) is seated.

3. The foldable electronic device (100) of claim 2, wherein a contact area between the first friction plate (251) and the first protruding pattern (241_1) has a first size while the foldable electronic device (100) is unfolded to a first angle in a folded state, and
wherein the contact area between the first friction plate (251) and the first protruding pattern (241_1) is gradually increased to have a second size greater than the first size while the foldable electronic device (100) is unfolded from a second angle greater than the first angle to a third angle.

4. The foldable electronic device (100) of claim 2 or 3, wherein the contact area between the first friction plate (251) and the first protruding pattern (241_1) is gradually decreased to have the first size smaller than the second size while the foldable electronic device (100) is unfolded from the third angle to 180 degrees.

5. The foldable electronic device (100) of any of claims 2 to 4, **wherein the** first protruding pattern (241_1) includes:
a first crest portion (241_1m) configured to further protrude beyond a peripheral portion; and
a first support portion (241_1v) formed lower than the first crest portion (241_1m) to form the peripheral portion, and
wherein the second protruding pattern (241_2) includes:
a second crest portion (241_2m) configured to further protrude beyond a peripheral portion; and
a second support portion (241_2v) formed lower than the second crest portion (241_2m) to form the peripheral portion.

6. The foldable electronic device (100) of claim 5, wherein a protruding upper end portion of the first crest portion (241_1v) and a protruding upper end portion of the second crest portion (241_2v) are formed flat.

7. The foldable electronic device (100) of claim 5 or 6, wherein the first crest portion (241_1v) has a gradually increasing area from the center of the first fixed cam part (241a) toward the outside, and
wherein the second crest portion (241_2v) has a gradually increasing area from the center of the second fixed cam part (241b) toward the outside.

8. The foldable electronic device (100) of any of claims 2 to 7, wherein the first friction plate (251) includes:
a first basic substrate portion (251_v) having a surface with a first size; and
a first extended substrate portion (251_m) configured to extend from the first basic substrate portion (251_v), the first extended substrate portion (251_m) having a surface with a second size greater than the first size, and
wherein the second friction plate (252) includes:
a second basic substrate portion (252_v) having a surface with the first size; and
a second extended substrate portion (252_m) configured to extend from the second basic substrate portion (252_v), the second extended substrate portion (252_m) having a surface with the second size greater than the first size.

9. The foldable electronic device (100) of claim 8, wherein an edge arc of the first basic substrate portion (251_v) has a greater length than an edge arc of the first extended substrate portion (251_m), and
wherein an edge arc of the second basic substrate portion (252_v) has a greater length than an edge arc of the second extended substrate portion (252_m).

10. The foldable electronic device (100) of any of claims 2 to 9, wherein a section of the first shaft (231) and a section of the second shaft (232) include at least one angled shape,
wherein the first friction plate (251) includes a first substrate hole (251_h) having a shape the same as or similar to the section of the first shaft (231), and
wherein the second friction plate (252) includes a second substrate hole (252_h) having a shape the same as or similar to the section of the second shaft (232).

11. The foldable electronic device (100) of any of claims 2 to 10, further comprising:
a first washer ring (249c) disposed between the first friction plate (251) and the first elastic member (242a); and
a second washer ring (249d) disposed between the second friction plate (252) and the second elastic member (242b).

12. The foldable electronic device (100) of any of claims 2 to 11, further comprising:
a fixed friction plate (250a) brought into contact with one side of the first friction plate (251) and one side of the second friction plate (252),
wherein the fixed friction plate includes (250a):
a substrate body (250a_3);
a first fixed substrate part (250a_1) disposed at an edge configured to extend from the substrate body (250a_3) in a first direction; and
a second fixed substrate part (250a_2) disposed at an edge configured to extend from the substrate body (250a_3) in a second direction.

13. The foldable electronic device of claim 12, wherein the first fixed substrate part (250a_1) includes:
a first basic fixed substrate portion (250a_1v) having a surface with a first size; and
a first extended fixed substrate portion (250a_1m) configured to extend from the first basic fixed substrate portion (250a_1v), the first extended fixed substrate portion (250a_1m) having a surface with a second size greater than the first size, and
wherein the second fixed substrate part (250a_2) includes:
a second basic fixed substrate portion (250a_2v) having a surface with the first size; and
a second extended fixed substrate portion (250a_2m) configured to extend from the second basic fixed substrate portion (250a_2v), the second extended fixed substrate portion (250a_2m) having a surface with the second size greater than the first size.

14. The foldable electronic device (100) of claim 12 or 13, wherein an edge arc of the first basic fixed substrate portion (250a_1v) has a greater length than an edge arc of the first extended fixed substrate portion (250a_1m), and
wherein an edge arc of the second basic fixed substrate portion (250a_2v) has a greater length than an edge arc of the second extended fixed substrate portion (250a_2m).

15. The foldable electronic device (100) of claim 12, wherein the first fixed substrate part (250a_1) includes:
a plurality of first basic fixed substrate portions (250a_1v) having a surface with a first size; and
a plurality of first extended fixed substrate portions (250a_1m) configured to extend from the plurality of first basic fixed substrate portions (250a_1v) and disposed between the plurality of first basic fixed substrate portions (250a_1v), the plurality of first extended fixed substrate portions (250a_1m) having a surface with a second size greater than the first size, and
wherein the second fixed substrate part (250a_2) includes:
a plurality of second basic fixed substrate portions (250a_2v) having a surface with the first size; and
a plurality of second extended fixed substrate portions (250a_2m) configured to extend from the plurality of second basic fixed substrate portions (250a_2v) and disposed between the plurality of second basic fixed substrate portions (250a_2v), the plurality of second extended fixed substrate portions (250a_2m) having a surface with the second size greater than the first size.

## Patentansprüche

1. Scharnierstruktur (200a) oder (200b), umfassend:
eine feste Halterung (213);
ein erstes Drehelement (211) und ein zweites Drehelement (212), die mit der festen Halterung (213) gekoppelt sind;
ein erstes Armelement (221) mit einer ersten Nockenstruktur, wobei das erste Armelement (221) so konfiguriert ist, dass es sich in Reaktion auf die Drehung des ersten Drehelements (211) dreht;
ein zweites Armelement (222) mit einer zweiten Nockenstruktur, wobei das zweite Armelement (222) so konfiguriert ist, dass es sich in Reaktion auf die Drehung des zweiten Drehelements (212) dreht;
eine erste Welle (231), die an dem ersten Armelement (221) befestigt ist;
eine zweite Welle (232), die an dem zweiten Armelement (222) befestigt ist;
ein Wellenbefestigungsteil (243), das dazu konfiguriert ist, die erste Welle (231) und die zweite Welle (232) zu befestigen;
ein erstes elastisches Element (242a), das zwischen der ersten Welle (231) und dem Wellenbefestigungsteil (243) angeordnet ist;
ein zweites elastisches Element (242b), das zwischen der zweiten Welle (232) und dem Wellenbefestigungsteil (243) angeordnet ist;
ein Nockenelement (241) mit einem ersten festen Nockenteil (241a), das auf einer Seite ein erstes Nockenteil aufweist, das mit der ersten Nockenstruktur befestigt ist, und einem zweiten festen Nockenteil (241b), das auf einer Seite ein zweites Nockenteil aufweist, das mit der zweiten Nockenstruktur befestigt ist;
eine erste Reibungsplatte (251), die zwischen dem ersten elastischen Element (242a) und dem Nockenelement (241) angeordnet und so konfiguriert ist, dass sie sich in Abhängigkeit von der Drehung der ersten Welle (231) dreht; und
eine zweite Reibungsplatte (252), die zwischen dem zweiten elastischen Element (242b) und dem Nockenelement (241) angeordnet und so konfiguriert ist, dass sie sich in Abhängigkeit von der Drehung der zweiten Welle (232) dreht,
wobei das erste feste Nockenteil (241a) ein erstes vorstehendes Muster (241_1) aufweist, das auf einer gegenüberliegenden Seite des ersten festen Nockenteils (241a) ausgebildet ist und zumindest teilweise mit der ersten Reibungsplatte (251) in Kontakt gebracht wird,
wobei das zweite feste Nockenteil (241b) ein zweites vorstehendes Muster (241_2) aufweist, das auf einer gegenüberliegenden Seite des zweiten festen Nockenteils (241b) ausgebildet ist und zumindest teilweise mit der zweiten Reibungsplatte (252) in Kontakt gebracht wird,
wobei eine Größe einer Kontaktfläche der ersten Reibungsplatte (251), die mit dem ersten vorstehenden Muster (241_1) in Kontakt gebracht wird, in Abhängigkeit von der Drehung der ersten Reibungsplatte (251) variiert, und
wobei eine Größe einer Kontaktfläche der zweiten Reibungsplatte (252), die mit dem zweiten vorstehenden Muster (241_2) in Kontakt gebracht wird, in Abhängigkeit von der Drehung der zweiten Reibungsplatte (252) variiert.

2. Faltbares elektronisches Gerät (100), umfassend:
eine Anzeige (160);
ein erstes Gehäuse (110) und ein zweites Gehäuse (120), in denen jeweils mindestens ein Abschnitt der Anzeige (160) untergebracht ist;
mindestens eine Scharnierstruktur (200a) oder (200b) nach Anspruch 1, die so konfiguriert ist, dass sie das erste Gehäuse (110) und das zweite Gehäuse (120) verbindet; und
ein Scharniergehäuse (150), auf dem die mindestens eine Scharnierstruktur (200a, 200b) sitzt.

3. Faltbares elektronisches Gerät (100) nach Anspruch 2, wobei eine Kontaktfläche zwischen der ersten Reibungsplatte (251) und dem ersten vorstehenden Muster (241_1) eine erste Größe aufweist, während das faltbare elektronische Gerät (100) in einem gefalteten Zustand auf einen ersten Winkel entfaltet wird, und
wobei die Kontaktfläche zwischen der ersten Reibungsplatte (251) und dem ersten vorstehenden Muster (241_1) allmählich auf eine zweite Größe vergrößert wird, die größer ist als die erste Größe, während das faltbare elektronische Gerät (100) von einem zweiten Winkel, der größer ist als der erste Winkel, auf einen dritten Winkel entfaltet wird.

4. Faltbares elektronisches Gerät (100) nach Anspruch 2 oder 3, wobei die Kontaktfläche zwischen der ersten Reibungsplatte (251) und dem ersten vorstehenden Muster (241_1) allmählich auf die erste Größe verringert wird, die kleiner als die zweite Größe ist, während das faltbare elektronische Gerät (100) von dem dritten Winkel auf 180 Grad entfaltet wird.

5. Faltbares elektronisches Gerät (100) nach einem der Ansprüche 2 bis 4, wobei das erste vorstehende Muster (241_1) Folgendes umfasst:
einen ersten Kammabschnitt (241_1m), der so konfiguriert ist, dass er über einen Umfangsabschnitt hinaus weiter vorsteht; und
einen ersten Stützabschnitt (241_1v), der tiefer als der erste Kammabschnitt (241_1m) ausgebildet ist, um den Umfangsabschnitt zu bilden, und
wobei das zweite vorstehende Muster (241_2) Folgendes umfasst:
einen zweiten Kammabschnitt (241_2m), der so konfiguriert ist, dass er über einen Umfangsabschnitt hinaus weiter vorsteht; und
einen zweiten Stützabschnitt (241_2v), der tiefer als der zweite Kammabschnitt (241_2m) ausgebildet ist, um den Umfangsabschnitt zu bilden.

6. Faltbares elektronisches Gerät (100) nach Anspruch 5, wobei ein vorstehender oberer Endabschnitt des ersten Kammabschnitts (241_1v) und ein vorstehender oberer Endabschnitt des zweiten Kammabschnitts (241_2v) flach ausgebildet sind.

7. Faltbares elektronisches Gerät (100) nach Anspruch 5 oder 6, wobei der erste Kammabschnitt (241_1v) eine sich von der Mitte des ersten festen Nockenteils (241a) nach außen hin allmählich vergrößernde Fläche aufweist, und
wobei der zweite Kammabschnitt (241_2v) eine sich von der Mitte des zweiten festen Nockenteils (241b) nach außen hin allmählich vergrößernde Fläche aufweist.

8. Faltbares elektronisches Gerät (100) nach einem der Ansprüche 2 bis 7, wobei die erste Reibungsplatte (251) Folgendes umfasst:
einen ersten Basissubstratabschnitt (251_v) mit einer Oberfläche mit einer ersten Größe; und
einen ersten verlängerten Substratabschnitt (251_m), der so konfiguriert ist, dass er sich vom ersten Basissubstratabschnitt (251_v) erstreckt, wobei der erste verlängerte Substratabschnitt (251_m) eine Oberfläche mit einer zweiten Größe aufweist, die größer ist als die erste Größe, und
wobei die zweite Reibungsplatte (252) Folgendes umfasst:
einen zweiten Basissubstratabschnitt (252_v) mit einer Oberfläche mit der ersten Größe; und
einen zweiten verlängerten Substratabschnitt (252_m), der so konfiguriert ist, dass er sich vom zweiten Basissubstratabschnitt (252_v) erstreckt, wobei der zweite verlängerte Substratabschnitt (252_m) eine Oberfläche mit der zweiten Größe aufweist, die größer ist als die erste Größe.

9. Faltbares elektronisches Gerät (100) nach Anspruch 8, wobei ein Randbogen des ersten Basissubstratabschnitts (251_v) eine größere Länge als ein Randbogen des ersten verlängerten Substratabschnitts (251_m) aufweist, und
wobei ein Randbogen des zweiten Basissubstratabschnitts (252_v) eine größere Länge als ein Randbogen des zweiten verlängerten Substratabschnitts (252_m) aufweist.

10. Faltbares elektronisches Gerät (100) nach einem der Ansprüche 2 bis 9,
wobei ein Abschnitt der ersten Welle (231) und ein Abschnitt der zweiten Welle (232) mindestens eine abgewinkelte Form aufweisen,
wobei die erste Reibungsplatte (251) ein erstes Substratloch (251_h) mit einer Form umfasst, die mit dem Abschnitt der ersten Welle (231) identisch oder diesem ähnlich ist, und
wobei die zweite Reibungsplatte (252) ein zweites Substratloch (252_h) mit einer Form umfasst, die mit dem Abschnitt der zweiten Welle (232) identisch oder diesem ähnlich ist.

11. Faltbares elektronisches Gerät (100) nach einem der Ansprüche 2 bis 10, umfassend ferner:
einen ersten Unterlegring (249c), der zwischen der ersten Reibungsplatte (251) und dem ersten elastischen Element (242a) angeordnet ist; und
einen zweiten Unterlegring (249d), der zwischen der zweiten Reibungsplatte (252) und dem zweiten elastischen Element (242b) angeordnet ist.

12. Faltbares elektronisches Gerät (100) nach einem der Ansprüche 2 bis 11, umfassend ferner:
eine feste Reibungsplatte (250a), die mit einer Seite der ersten Reibungsplatte (251) und einer Seite der zweiten Reibungsplatte (252) in Kontakt gebracht wird,
wobei die feste Reibungsplatte (250a) Folgendes umfasst:
einen Substratkörper (250a_3);
ein erstes festes Substratteil (250a_1), das an einer Kante angeordnet ist, die so konfiguriert ist, dass sie sich vom Substratkörper (250a_3) in einer ersten Richtung erstreckt; und
ein zweites festes Substratteil (250a_2), das an einer Kante angeordnet ist, die so konfiguriert ist, dass sie sich vom Substratkörper (250a_3) in einer zweiten Richtung erstreckt.

13. Faltbares elektronisches Gerät nach Anspruch 12, wobei das erste feste Substratteil (250a_1) Folgendes umfasst:
einen ersten grundlegenden festen Substratabschnitt (250a_1v) mit einer Oberfläche mit einer ersten Größe; und
einen ersten verlängerten festen Substratabschnitt (250a_1m), der so konfiguriert ist, dass er sich vom ersten grundlegenden festen Substratabschnitt (250a_1v) erstreckt, wobei der erste verlängerte feste Substratabschnitt (250a_1m) eine Oberfläche mit einer zweiten Größe aufweist, die größer ist als die erste Größe, und
wobei das zweite feste Substratteil (250a_2) Folgendes umfasst:
einen zweiten grundlegenden festen Substratabschnitt (250a_2v) mit einer Oberfläche mit der ersten Größe; und
einen zweiten verlängerten festen Substratabschnitt (250a_2m), der so konfiguriert ist, dass er sich von dem zweiten grundlegenden festen Substratabschnitt (250a_2v) erstreckt, wobei der zweite verlängerte feste Substratabschnitt (250a_2m) eine Oberfläche mit der zweiten Größe aufweist, die größer ist als die erste Größe.

14. Faltbares elektronisches Gerät (100) nach Anspruch 12 oder 13, wobei ein Randbogen des ersten grundlegenden festen Substratabschnitts (250a_1v) eine größere Länge als ein Randbogen des ersten verlängerten festen Substratabschnitts (250a_1m) aufweist, und
wobei ein Randbogen des zweiten grundlegenden festen Substratabschnitts (250a_2v) eine größere Länge als ein Randbogen des zweiten verlängerten festen Substratabschnitts (250a_2m) aufweist.

15. Faltbares elektronisches Gerät (100) nach Anspruch 12, wobei das erste feste Substratteil (250a_1) Folgendes umfasst:
mehrere erste grundlegende feste Substratabschnitte (250a_1v) mit einer Oberfläche mit einer ersten Größe; und
mehrere erste verlängerte feste Substratabschnitte (250a_1m), die so konfiguriert sind, dass sie sich von den mehreren ersten grundlegenden festen Substratabschnitten (250a_1v) erstrecken, und sich zwischen den mehreren ersten grundlegenden festen Substratabschnitten (250a_1v) befinden, wobei die mehreren ersten verlängerten festen Substratabschnitte (250a_1m) eine Oberfläche mit einer zweiten Größe aufweisen, die größer ist als die erste Größe, und
wobei das zweite feste Substratteil (250a_2) Folgendes umfasst:
mehrere zweite grundlegende feste Substratabschnitte (250a_2v) mit einer Oberfläche mit der ersten Größe; und
mehrere zweite verlängerte feste Substratabschnitte (250a_2m), die so konfiguriert sind, dass sie sich von den mehreren zweiten grundlegenden festen Substratabschnitten (250a_2v) erstrecken, und sich zwischen den mehreren zweiten grundlegenden festen Substratabschnitten (250a_2v) befinden, wobei die mehreren zweiten verlängerten festen Substratabschnitte (250a_2m) eine Oberfläche mit der zweiten Größe aufweisen, die größer ist als die erste Größe.

## Revendications

1. Structure de charnière (200a) ou (200b) comprenant :
un support fixe (213) ;
un premier élément rotatif (211) et un second élément rotatif (212) couplés au support fixe (213) ;
un premier élément de bras (221) comportant une première structure de came, le premier élément de bras (221) étant configuré pour tourner en réponse à une rotation du premier élément rotatif (211) ;
un second élément de bras (222) comportant une seconde structure de came, le second élément de bras (222) étant configuré pour tourner en réponse à une rotation du second élément rotatif (212) ;
un premier arbre (231) fixé au premier élément de bras (221) ;
un second arbre (232) fixé au second élément de bras (222) ;
une portion de fixation d'arbre (243) configurée pour fixer le premier arbre (231) et le second arbre (232) ;
un premier élément élastique (242a) disposé entre le premier arbre (231) et la portion de fixation d'arbre (243) ;
un second élément élastique (242b) disposé entre le second arbre (232) et la portion de fixation d'arbre (243) ;
un élément de came (241) comportant une première portion de came fixe (241a) ayant, sur un côté de celle-ci, une première portion de came fixée à la première structure de came et une seconde portion de came fixe (241b) ayant, sur un côté de celle-ci, une seconde portion de came fixée à la seconde structure de came ;
une première plaque de friction (251) disposée entre le premier élément élastique (242a) et l'élément de came (241) et configurée pour tourner avec une rotation du premier arbre (231); et
une seconde plaque de friction (252) disposée entre le second élément élastique (242b) et l'élément de came (241) et configurée pour tourner avec une rotation du second arbre (232),
dans lequel la première portion de came fixe (241a) comporte un premier motif saillant (241_1) formé sur un côté opposé de la première portion de came fixe (241a) et au moins partiellement entrant en contact avec la première plaque de friction (251),
dans lequel la seconde portion de came fixe (241b) comporte un second motif saillant (241_2) formé sur un côté opposé de la seconde portion de came fixe (241b) et au moins partiellement entrant en contact avec la seconde plaque de friction (252),
dans lequel une taille d'une surface de contact de la première plaque de friction (251) entrant en contact avec le premier motif saillant (241_1) varie avec une rotation de la première plaque de friction (251), et
dans lequel une taille d'une surface de contact de la seconde plaque de friction (252) entrant en contact avec le second motif saillant (241_2) varie avec une rotation de la seconde plaque de friction (252).

2. Équipement électronique pliable (100), comprenant :
un afficheur (160) ;
un premier boîtier (110) et un second boîtier (120) dans chacun desquels est logée au moins une partie de l'afficheur (160) ;
au moins une structure de charnière (200a) ou (200b) selon la revendication 1, configurée pour relier le premier boîtier (110) et le second boîtier (120) ; et
un boîtier de charnière (150) sur lequel est disposée l'au moins une structure de charnière (200a, 200b).

3. Équipement électronique pliable (100) selon la revendication 2, dans lequel une zone de contact entre la première plaque de friction (251) et le premier motif saillant (241_1) présente une première taille lorsque l'équipement électronique pliable (100) est déplié à un premier angle dans un état plié, et
dans lequel la zone de contact entre la première plaque de friction (251) et le premier motif saillant (241_1) est progressivement augmentée pour atteindre une seconde taille supérieure à la première taille lorsque l'équipement électronique pliable (100) est déplié d'un deuxième angle supérieur au premier angle jusqu'à un troisième angle.

4. Équipement électronique pliable (100) selon la revendication 2 ou 3, dans lequel la zone de contact entre la première plaque de friction (251) et le premier motif saillant (241_1) est progressivement diminuée pour présenter la première taille inférieure à la seconde taille, lorsque l'équipement électronique pliable (100) est déplié du troisième angle jusqu'à 180 degrés.

5. Équipement électronique pliable (100) selon l'une quelconque des revendications 2 à 4,
dans lequel le premier motif saillant (241_1) comporte :
une première portion de crête (241_1m) configurée pour dépasser davantage au-delà d'une portion périphérique ; et
une première portion de support (241_1v) formée au niveau plus bas que la première portion de crête (241_1m) afin de former la portion périphérique, et
dans lequel le second motif saillant (241_2) comporte :
une seconde portion de crête (241_2m) configurée pour dépasser davantage au-delà d'une portion périphérique ; et
une seconde portion de support (241_2v) formée au niveau plus bas que la seconde portion de crête (241_2m) afin de former la portion périphérique.

6. Équipement électronique pliable (100) selon la revendication 5, dans lequel une portion d'extrémité supérieure saillante de la première portion de crête (241_1v) et une portion d'extrémité supérieure saillante de la seconde portion de crête (241_2v) sont formées en forme plane.

7. Équipement électronique pliable (100) selon la revendication 5 ou 6, dans lequel la première portion de crête (241_1v) a une surface augmentant progressivement du centre de la première portion de came fixe (241a) vers l'extérieur, et
dans lequel la seconde portion de crête (241_2v) a une surface diminuant progressivement du centre de la seconde portion de came fixe (241b) vers l'extérieur.

8. Équipement électronique pliable (100) selon l'une quelconque des revendications 2 à 7,
dans lequel la première plaque de friction (251) comporte :
une première portion de substrat de base (251_v) ayant une surface d'une première taille; et
une première portion de substrat étendue (251_m) configurée pour s'étendre à partir de la première portion de substrat de base (251_v), la première portion de substrat étendue (251_m) ayant une surface d'une seconde taille supérieure à la première taille, et
dans lequel la seconde plaque de friction (252) comporte :
une seconde portion de substrat de base (252_v) ayant une surface de la première taille; et
une seconde portion de substrat étendue (252_m) configurée pour s'étendre à partir de la seconde portion de substrat de base (252_v), la seconde portion de substrat étendue (252_m) ayant une surface d'une seconde taille supérieure à la première taille.

9. Équipement électronique pliable (100) selon la revendication 8, dans lequel un arc de bord de la première portion de substrat de base (251_v) présente une longueur supérieure à celle d'un arc de bord de la première portion de substrat étendue (251_m), et
dans lequel un arc de bord de la seconde portion de substrat de base (252_v) présente une longueur supérieure à celle d'un arc de bord de la seconde portion de substrat étendue (252_m).

10. Équipement électronique pliable (100) selon l'une quelconque des revendications 2 à 9,
dans lequel une section du premier arbre (231) et une section du seconde arbre (232) présentent au moins une forme angulaire,
dans lequel la première plaque de friction (251) comporte un premier trou de substrat (251_h) présentant une forme identique ou similaire à celle de la section du premier arbre (231), et
dans lequel la seconde plaque de friction (252) comporte un second trou de substrat (252_h) présentant une forme identique ou similaire à celle de la section du second arbre (232).

11. Équipement électronique pliable (100) selon l'une quelconque des revendications 2 à 10, comprenant en outre :
une première rondelle (249c) disposée entre la première plaque de friction (251) et le premier élément élastique (242a) ; et
une seconde rondelle (249d) disposée entre la seconde plaque de friction (252) et le second élément élastique (242b).

12. Équipement électronique pliable (100) selon l'une quelconque des revendications 2 à 11, comprenant en outre :
une plaque de friction fixe (250a) entrant en contact avec un côté de la première plaque de friction (251) et un côté de la seconde plaque de friction (252),
dans lequel la plaque de friction fixe (250a) comporte :
un corps de substrat (250a_3);
une première portion de substrat fixe (250a_1) disposée à un bord configuré pour s'étendre à partir du corps de substrat (250a_3) dans une première direction ; et
une seconde portion de substrat fixe (250a_2) disposée à un bord configuré pour s'étendre à partir du corps de substrat (250a_3) dans une seconde direction.

13. Équipement électronique pliable selon la revendication 12, dans lequel la première portion de substrat fixe (250a_1) comporte :
une première portion de substrat de base fixe (250a_1v) ayant une surface d'une première taille ; et
une première portion de substrat fixe étendue (250a_1m) configurée pour s'étendre à partir de la première portion de substrat de base fixe (250a_1v), la première portion de substrat fixe étendue (250a_1m) ayant une surface d'une seconde taille supérieure à la première taille, et
dans lequel la seconde portion de substrat fixe (250a_2) comporte:
une seconde portion de substrat de base fixe (250a_2v) ayant une surface de la première taille ; et
une seconde portion de substrat fixe étendue (250a_2m) configurée pour s'étendre à partir de la seconde portion de substrat de base fixe (250a_2v), la seconde portion de substrat fixe étendue (250a_2m) ayant une surface de la seconde taille supérieure à la première taille.

14. Équipement électronique pliable (100) selon la revendication 12 ou 13, dans lequel un arc de bord de la première portion de substrat de base fixe (250a_1v) présente une longueur supérieure à celle d'un arc de bord de la première portion de substrat fixe étendue (250a_1m), et
dans lequel un arc de bord de la seconde portion de substrat de base (250a_2v) présente une longueur supérieure à celle d'un arc de bord de la seconde portion de substrat fixe étendue (250a_2m).

15. Équipement électronique pliable (100) selon la revendication 12, dans lequel la première portion de substrat fixe (250a_1) comporte:
une pluralité de premières portions de substrat de base fixe (250a_1v) ayant une surface d'une première taille ; et
une pluralité de premières portions de substrat fixe étendues (250a_1m) configurées pour s'étendre à partir de la pluralité de premières portions de substrat de base fixe (250a_1v) et disposées entre la pluralité de premières portions de substrat de base fixe (250a_1v), la pluralité de premières portions de substrat fixe étendues (250a_1m) ayant une surface d'une seconde taille supérieure à la première taille, et
dans lequel la seconde portion de substrat fixe (250a_2) comporte :
une pluralité de secondes portions de substrat de base fixe (250a_2v) ayant une surface de la première taille; et
une pluralité de secondes portions de substrat fixe étendues (250a_2m) configurées pour s'étendre à partir de la pluralité de secondes portions de substrat de base fixe (250a_2v) et disposées entre la pluralité de secondes portions de substrat de base fixe (250a_2v), la pluralité de secondes portions de substrat fixe étendues (250a_2m) ayant une surface de la seconde taille supérieure à la première taille.
